(19) Europäisches Patentamt
European Patent Office
Office européen des brevets

(11) **EP 4 682 004 A1**

(12) **EUROPEAN PATENT APPLICATION**

(43) Date of publication:
**21.01.2026 Bulletin 2026/04**

(21) Application number: **25154348.4**

(22) Date of filing: **28.01.2025**

(51) International Patent Classification (IPC):
**B60W 30/06** (2006.01)    **B62D 15/02** (2006.01)

(52) Cooperative Patent Classification (CPC):
**B60W 30/06; B60W 30/0956; B60W 60/0011;**
**B60W 60/0015; B60W 60/0018; B60W 60/00186;**
**B60W 60/0059; B62D 15/0285;** B60W 2050/0292;
B60W 2050/0295; B60W 2520/10; B60W 2552/10;
B60W 2552/53; B60W 2554/20; B60W 2554/402;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.07.2024 KR 20240094901**

(71) Applicants:
• **Hyundai Motor Company**
**Seoul 06797 (KR)**
• **Kia Corporation**
**Seocho-gu,**
**Seoul 06797 (KR)**

• **Ajou University Industry-Academic Cooperation**
**Foundation**
**Suwon-si, Gyeonggi-do 16499 (KR)**

(72) Inventors:
• **JANG, Jae Min**
**18280 Hwaseong-si, Gyeonggi-do (KR)**
• **MIN, Young Bin**
**18280 Hwaseong-si, Gyeonggi-do (KR)**
• **PARK, Jong Sung**
**18280 Hwaseong-si, Gyeonggi-do (KR)**
• **SONG, Bong Sob**
**16499 Suwon-si, Gyeonggi-do (KR)**

(74) Representative: **Hoffmann Eitle**
**Patent- und Rechtsanwälte PartmbB**
**Arabellastraße 30**
**81925 München (DE)**

(54) **VEHICLE AND METHOD OF OPERATING THE VEHICLE FOR DETERMINING ALLOWABLE SPACE FOR EMERGENCY STOP DURING AUTONOMOUS VALET PARKING**

(57)    An autonomous driving vehicle includes at least one sensor configured to detect a surrounding environment of the autonomous driving vehicle to generate surrounding environment information; a controller configured to control one or more operations of the autonomous driving vehicle; and a processor configured to: monitor a state of the autonomous driving vehicle to generate vehicle state information; during autonomous driving of the autonomous driving vehicle, determine, based on at least one of the surrounding environment information or the vehicle state information, whether a minimum risk maneuver is required; and determine, based on the minimum risk maneuver being required, an emergency stop area, in which the autonomous driving vehicle is able to come to a full stop; and control, via the controller and based on the emergency stop area, the autonomous driving vehicle to perform autonomous parking.

FIG. 1

EP 4 682 004 A1

**(Cont. next page)**

(52) Cooperative Patent Classification (CPC): (Cont.)
B60W 2554/801; B60W 2554/802; B60Y 2302/05

**Description**

**BACKGROUND**

**Field**

The present disclosure relates to a vehicle and a method of operating the vehicle, and more particularly to autonomous valet parking.

**Description**

Recent technological developments in the field of vehicle automation have given rise to advanced driver assistance systems (ADAS) for driver assistance. The ADAS encompasses multiple subcategories of technology and provides convenience to drivers. The ADAS systems are also referred to as autonomous driving or automated driving systems (ADS).

During autonomous driving of a vehicle, the autonomous driving system may experience malfunctions. If appropriate measures are not taken to address such issues, the vehicle can be placed in a dangerous situation.

**SUMMARY**

One or more example embodiments of the present disclosure aims to provide a vehicle capable of determining the allowable space for an emergency stop during autonomous valet parking.

The example embodiments of this document aims to provide a method of operating the vehicle for determining the allowable space for an emergency stop during autonomous valet parking.

The technical objects of this document are not limited to the aforesaid, and other objects not described herein with can be clearly understood by those skilled in the art from the descriptions below.

According to one or more example embodiments of the present disclosure, an autonomous driving vehicle may include: at least one sensor configured to detect a surrounding environment of the autonomous driving vehicle to generate surrounding environment information; a controller configured to control one or more operations of the autonomous driving vehicle; and a processor. The processor may be configured to: monitor a state of the autonomous driving vehicle to generate vehicle state information; during autonomous driving of the autonomous driving vehicle, determine, based on at least one of the surrounding environment information or the vehicle state information, whether a minimum risk maneuver is required; determine, based on the minimum risk maneuver being required, an emergency stop area, in which the autonomous driving vehicle is able to come to a full stop; and control, via the controller and based on the emergency stop area, the autonomous driving vehicle to perform autonomous parking. The emergency stop area may be determined further based on a speed of the autonomous driving vehicle, a time required for the autonomous driving vehicle to come to the full stop, and whether an obstacle is present in a driving path of the autonomous driving vehicle

The processor may be configured to determine the emergency stop area by: determining, based on the speed of the autonomous driving vehicle and the time required for the autonomous driving vehicle to come to the full stop, a longitudinal length of the emergency stop area.

The obstacle may be a fixed obstacle. The processor may be further configured to: determine whether the obstacle is present in the driving path of the autonomous driving vehicle; determine a distance between the fixed obstacle and a side, of the emergency stop area, that is closest to the autonomous driving vehicle; and update, based on the longitudinal length of the emergency stop area being greater than the distance, the emergency stop area by adjusting the longitudinal length of the emergency stop area to match the distance.

The processor may be configured to determine the emergency stop area by: determining, based on a width of the autonomous driving vehicle and a predetermined stopping distance constant, a lateral length of the emergency stop area.

The processor may be configured to determine the emergency stop area by: determining, based on a width of the autonomous driving vehicle and a predetermined maximum lane tolerance, a lateral length of the emergency stop area.

The obstacle may be a dynamic obstacle. The processor may be further configured to: determine whether the obstacle is present within the emergency stop area; determine a collision risk associated with the dynamic obstacle; and adjust, based on the collision risk, a longitudinal length of the emergency stop area.

The obstacle may be a dynamic obstacle. The processor may be further configured to: determine whether the obstacle is present within the emergency stop area; determine a distance between the dynamic obstacle and a side, of the emergency stop area, that is closest to the autonomous driving vehicle; and update, based on a longitudinal length of the emergency stop area being greater than the distance, the emergency stop area by adjusting the longitudinal length of the emergency stop area to match the distance.

Based on the speed of the autonomous driving vehicle being greater than 0 km/h and less than or equal to 10 km/h, the time required for the autonomous driving vehicle to come to the full stop may be set to 3 seconds.

Based on the speed of the autonomous driving vehicle being greater than 10 km/h and less than or equal to 20 km/h, the time required for the autonomous driving vehicle to come to the full stop may be set to 4 seconds.

Based on the speed of the autonomous driving vehicle being greater than 20 km/h and less than or equal to 30 km/h, the time required for the autonomous driving vehicle to come to the full stop may be set to 5 seconds.

According to one or more example embodiments of the present disclosure, a server may include: a communication interface configured to communicate with an autonomous driving vehicle; and a processor. The processor may be configured to: receive, from the autonomous driving vehicle, vehicle state information of the autonomous driving vehicle; determine, based on at least one of surrounding environment information of the autonomous driving vehicle or the vehicle state information, whether a minimum risk maneuver is required for the autonomous driving vehicle; determine, based on the minimum risk maneuver being required, an emergency stop area, in which the autonomous driving vehicle is able to come to a full stop; and cause, based on the emergency stop area, the autonomous driving vehicle to perform autonomous parking. The emergency stop area may be determined further based on a speed of the autonomous driving vehicle, a time required for the autonomous driving vehicle to come to the full stop, and whether an obstacle is present in a driving path of the autonomous driving vehicle.

The processor may be configured to determine the emergency stop area by: determining, based on the speed of the autonomous driving vehicle and the time required for the autonomous driving vehicle to come to the full stop, a longitudinal length of the emergency stop area.

The obstacle may be a fixed obstacle. The processor may be further configured to: determine whether the obstacle is present in the driving path of the autonomous driving vehicle; determine a distance between the fixed obstacle and a side, of the emergency stop area, that is closest to the autonomous driving vehicle; and update, based on the longitudinal length of the emergency stop area being greater than the distance, the emergency stop area by adjusting the longitudinal length of the emergency stop area to match the distance.

The processor may be configured to determine the emergency stop area by: determining, based on a width of the autonomous driving vehicle and a predetermined stopping distance constant, a lateral length of the emergency stop area.

The processor may be configured to determine the emergency stop area by: determining, based on a width of the autonomous driving vehicle and a predetermined maximum lane tolerance, a lateral length of the emergency stop area.

The obstacle may be a dynamic obstacle. The processor may be further configured to: determine whether the obstacle is present within the emergency stop area; determine a distance between the dynamic obstacle and a side, of the emergency stop area, that is closest to the autonomous driving vehicle; and update, based on a longitudinal length of the emergency stop area being greater than the distance, the emergency stop area by adjusting the longitudinal length of the emergency stop area to match the distance.

The processor may be further configured to: determine whether another vehicle is present within the emergency stop area; and cause the another vehicle to move out of the emergency stop area.

The processor may be configured to cause the autonomous driving vehicle to perform autonomous parking by sending a first signal causing the autonomous driving vehicle to move into the emergency stop area. The processor may be further configured to: cause movement of another vehicle to prevent the another vehicle from entering the emergency stop area by sending a second signal causing the another vehicle to drive along a path that prevents the another vehicle from entering the emergency stop area.

According to one or more example embodiments of the present disclosure, a method performed by an apparatus of an autonomous driving vehicle may include: determining surrounding environment information of the autonomous driving vehicle by detecting, via one or more sensors, a surrounding environment of the autonomous driving vehicle; determining vehicle state information of the autonomous driving vehicle by monitoring a state of the autonomous driving vehicle; during autonomous driving of the autonomous driving vehicle, determining, based on at least one of the surrounding environment information or the vehicle state information, whether a minimum risk maneuver is required; determining, based on the minimum risk maneuver being required, an emergency stop area, in which the autonomous driving vehicle is able to come to a full stop; and control, based on the emergency stop area, the autonomous driving vehicle to perform autonomous parking. The emergency stop area may be determined further based on a speed of the autonomous driving vehicle, a time required for the autonomous driving vehicle to come to the full stop, and whether an obstacle is present in a driving path of the autonomous driving vehicle.

Determining the emergency stop area may include: determining, based on the speed of the autonomous driving vehicle and the time required for the autonomous driving vehicle to come to the full stop, a longitudinal length of the emergency stop area.

The obstacle may be a fixed obstacle. The method may further include: determining whether the obstacle is present in the driving path of the autonomous driving vehicle; determining a distance between the fixed obstacle and a side, of the emergency stop area, that is closest to the autonomous driving vehicle; and updating, based on the longitudinal length of the emergency stop area being greater than the distance, the emergency stop area by adjusting the longitudinal length of the emergency stop area to match the distance.

Determining the emergency stop area may include: determining, based on a width of the autonomous driving vehicle and a predetermined stopping distance constant, a lateral length of the emergency stop area.

Determining the emergency stop area may include: determining, based on a width of the autonomous driving vehicle and a predetermined maximum lane tolerance, a lateral length of the emergency stop area.

The obstacle may be a dynamic obstacle. The method may further include: determining whether the obstacle is present within the emergency stop area; determining a collision risk associated with the dynamic obstacle; and adjusting, based on the collision risk, a longitudinal length of the emergency stop area.

**BRIEF DESCRIPTION OF THE DRAWINGS**

FIG. 1 is a block diagram of a vehicle.
FIG. 2 is a functional block diagram of a processor;
FIG. 3 is a diagram illustrating vehicle state-specific minimum risk maneuver (MRM) strategies;
FIGS. 4A and 4B are diagrams illustrating how to determine MRM strategies based on surrounding environmental information within a designated MRC range of the vehicle;
FIG. 5 is a diagram illustrating how the priority of MRM strategies changes based on surrounding object information within a designated MRC range of the vehicle;
FIGS. 6A to 6C are diagrams illustrating how to determine whether a collision with a surrounding vehicle occurs due to the MRM of the host vehicle;
FIG. 7 is a diagram illustrating how to determine an MRM strategy for the host vehicle considering collision risks with surrounding vehicles;
FIGS. 8A and 8B are diagrams illustrating how to calculate a distance between the host vehicle and a surrounding vehicle;
FIG. 9 is a flowchart illustrating the operation of a vehicle;
FIG. 10 is a flowchart illustrating the operation of a vehicle for determining an MRM strategy;
FIG. 11 is a flowchart illustrating the operation of predicting emergency stop allowable space and collision risk during autonomous driving;
FIG. 12 is a diagram illustrating MRM strategies;
FIG. 13 is a diagram illustrating how to predict emergency stop allowable space when the final MRM strategy is an in-lane stop type;
FIG. 14 is a diagram illustrating how to predict emergency stop allowable space when the final MRM strategy is a straight stop type;
FIG. 15 is a diagram illustrating how to predict collision risk when the final MRM strategy is an in-lane stop type; and
FIG. 16 is a diagram illustrating how to predict collision risk when the final MRM strategy is a straight stop type.

**DETAILED DESCRIPTION**

Hereinafter, descriptions are made of one or more example embodiments of the present disclosure in detail with reference to accompanying drawings.

The organization of this disclosure and its operational effects will be readily apparent from the detailed explanations provided below, facilitating a clear understanding. Before the detailed explanation in this document, it should be noted that the same reference numeral will be used for the same component whenever possible, even if displayed on different drawings, and that detailed descriptions of well-known components will be omitted to avoid obscuring the subject matter of this disclosure.

Before proceeding with the detailed explanation in this document, the terms used herein may be defined as follows.

A vehicle refers to one equipped with an automated driving system (ADS) capable of autonomous driving. For example, a vehicle may perform at least one of steering, acceleration, deceleration, lane changing, and stopping (or parking) without driver intervention by the ADS. The ADS may include, for example, at least one of pedestrian detection and collision mitigation system (PDCMS), lane change decision aid system (LCDAS), lane departure warning system (LDWS), adaptive cruise control (ACC), lane keeping assistance system (LKAS), road boundary departure prevention system (RBDPS), curve speed warning system (CSWS), forward vehicle collision warning system (FVCWS), and low speed following (LSF).

A driver is a human who uses the vehicle and receives services from the autonomous driving system.

Vehicle control authority refers to the authority to control at least one component and/or function of the vehicle. At least one function of the vehicle may include, for example, at least one of steering function, acceleration function, deceleration function (or braking function), lane change function, lane detection function, lateral control function, obstacle detection and distance sensing function, powertrain control function, safe area detection function, engine on/off function, power on/off function, and vehicle locking/unlocking function. The listed vehicle functions are examples provided for illustrative purposes, and the present disclosure is not limited thereto.

A shoulder refers to the space between the outermost road boundary (or the boundary of the outermost lane) in the direction of travel of the vehicle and the road edge (e.g., curb, guardrail).

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., determining an emergency stop area) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., determining an emergency stop area) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., determining an emergency stop area) described herein.

Minimum risk maneuver (MRM) operation(s) may also be controlled, for example, based on one or more features (e.g., determining an emergency stop area) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., determining an emergency stop area) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may include an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., determining an emergency stop area) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

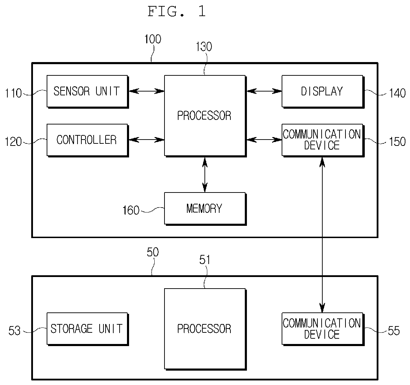

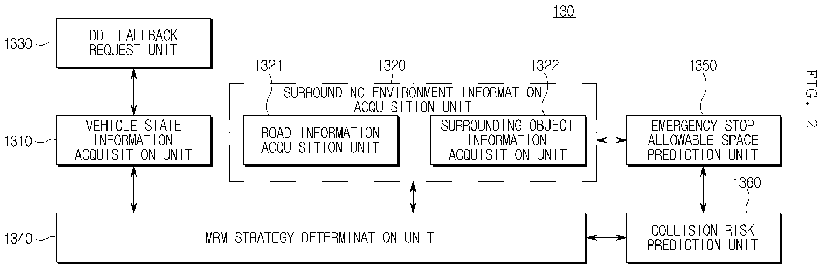

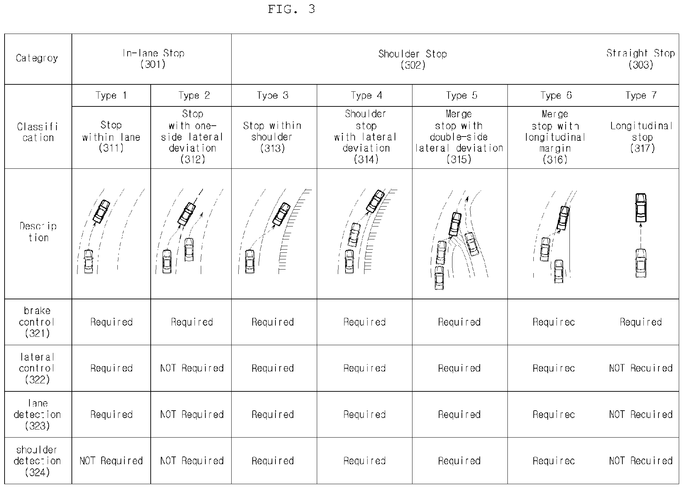

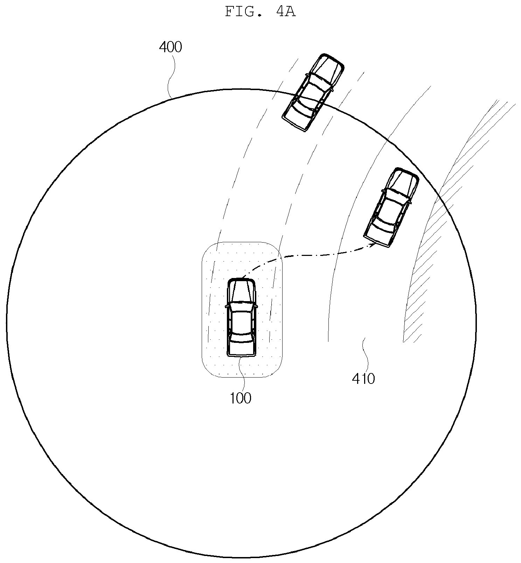

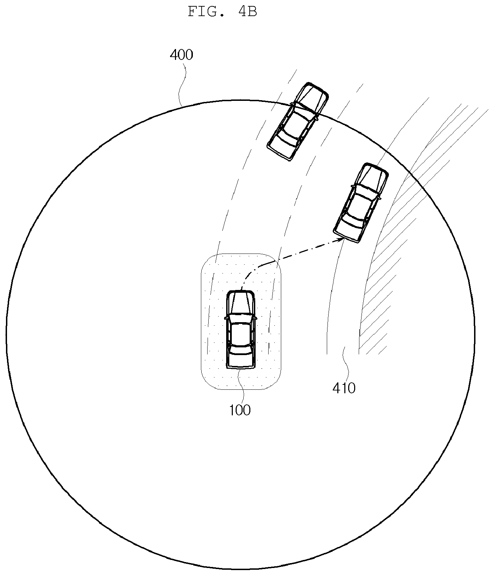

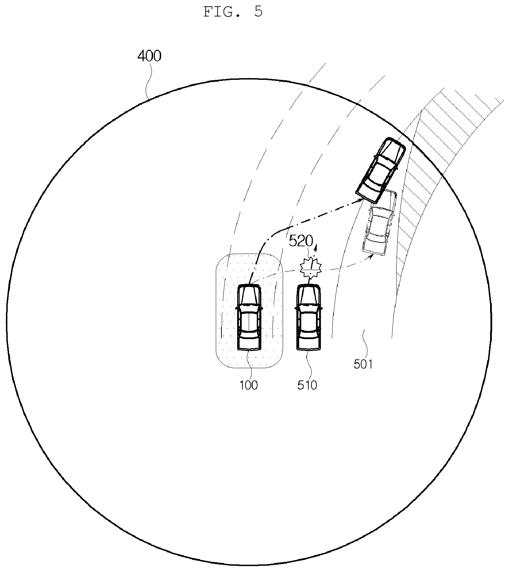

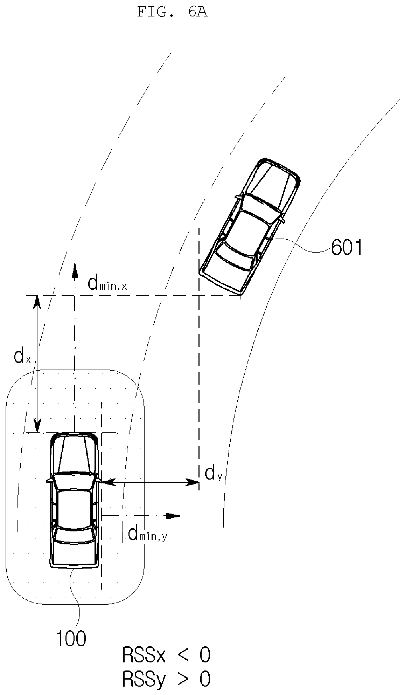

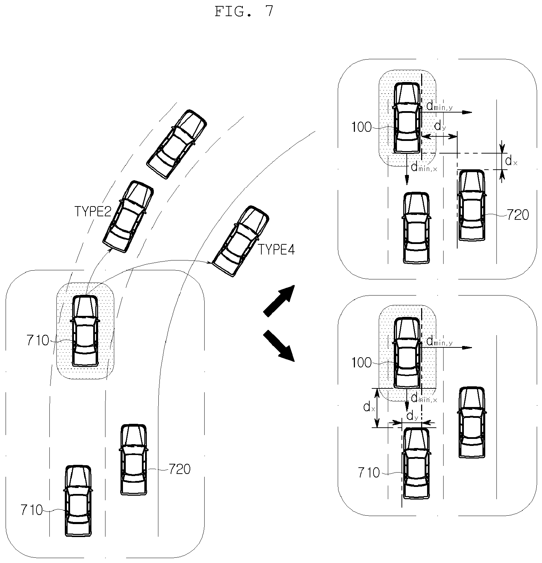

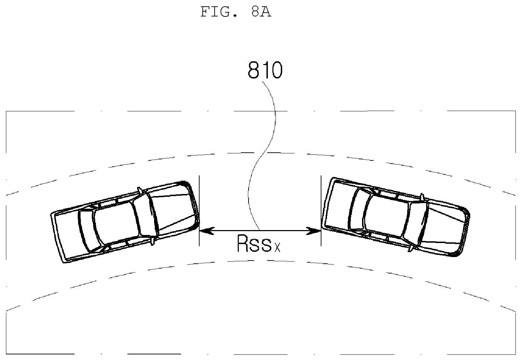

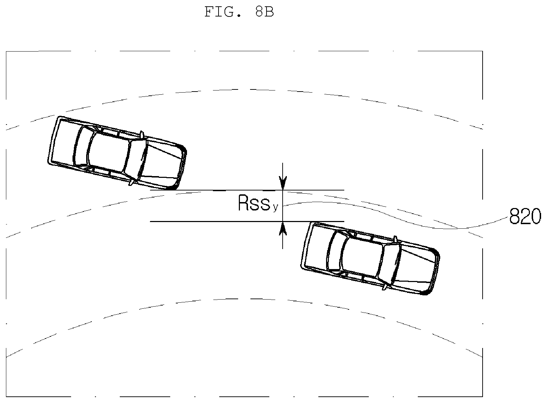

FIG. 1 is a block diagram of a vehicle. The configuration of the vehicle is depicted in FIG. 1, and each component may be configured as one chip, one component, or one electronic circuit, or a combination of chips, components, and/or electronic circuits. Some of the components shown in FIG. 1 may be separated into multiple components and configured as different chips, different components, or different electronic circuits, and some components may be combined to be configured as one chip, one component, or one electronic circuit. Some components shown in 1 may be omitted, or other components not shown may be added. At least some of the components in FIG. 1 will be described with reference to FIGS. 2 to 8. FIG. 2 is a functional block diagram of a processor, and FIG. 3 is a diagram illustrating vehicle state-specific minimum risk maneuver (MRM) strategies. FIGS. 4A and 4B are diagrams illustrating how to determine MRM strategies based on surrounding environmental information within a designated MRC range of the vehicle, and FIG. 5 is a diagram illustrating how the priority of MRM strategies changes based on surrounding object information within a designated MRC range of the vehicle. FIGS. 6A to 6C are diagrams illustrating how to determine whether a collision with a surrounding vehicle occurs due to the MRM of the host vehicle, and FIG. 7 is a diagram illustrating how to determine an MRM strategy for the host vehicle considering collision risks with surrounding vehicles. FIGS. 8A and 8B are diagrams illustrating how to calculate a distance between the host vehicle and a surrounding vehicle.

With reference to FIG. 1, the autonomous valet parking server (also referred to as an autonomous parking server) 50 may include a processor 51, a storage unit 53, and a communication device 55. The communication device 55 (also referred to as a communication interface, a communicator, a communication module, a communication unit, etc.) may allow software and/or data to be transferred between a device and one or more external devices, and/or between one or more components of a device. Communication device 55may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via device 55 may be in the form of signals, which may be electronic, electromagnetic, optical, infrared, or other signals capable of being received by device 55. These signals may be provided to communication device 55 via a communication path of a device, which may be implemented using, for example, wire or cable, fiber optics, a cellular link, a radio frequency (RF) link and/or other communications channels. Communication device 55 may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

The storage unit 53 may store a digital map of parking lots where autonomous valet parking (also referred to as autonomous parking) is possible. During the autonomous parking, the vehicle may be autonomously guided to a parking spot with or without a driver of the vehicle being present inside the vehicle.

The storage unit 53 may also statically or temporarily store all information necessary for autonomous valet parking, including vehicles parked within the parking lot and infrastructure components. This information may be stored as part of the data included in the digital map.

The processor 51 may control autonomous valet parking for the vehicle. The processor 51 may generate all control signals for a vehicle performing autonomous valet parking and transmit the signals to the vehicle through the communication device 55, thereby controlling the vehicle 100 to perform autonomous parking. In this case, all information for autonomous valet parking is provided by the autonomous valet parking server, and the processor 51 of the server may generate and transmit control commands to the controller 120 on behalf of the processor 130 of the vehicle 100.

The autonomous valet parking server 50 may instruct the vehicle 100 to perform autonomous valet parking on its own. In this case, the processor 51 of the server may provide the vehicle 100 with a digital map associated with the parking lot, the target position where the vehicle 100 should park, and the guide route information needed for parking. The vehicle 100 may then use this information from the autonomous valet parking server to perform autonomous valet parking by itself.

With reference to FIG. 1, the vehicle 100 may include a sensor unit 110, a controller 120, a processor 130, a display 140, a communication device 150, and memory 160.

The sensor unit 110 may detect the surrounding environment of the vehicle 100 using at least one sensor and generate data related to the surrounding environment based on the detection results. The sensor unit 110 may acquire road information, information about objects around the vehicle (e.g., other vehicles, pedestrians, objects, curbs, guardrails, lanes, obstacles), and/or the vehicle's location information based on sensing data obtained from at least one sensor. Road information may include, for example, lane position, lane shape, lane color, lane type, number of lanes, presence of shoulders, or size of shoulders. Objects around the vehicle may include, for example, the position of objects, the size of objects, the shape of objects, the distance to objects, and the relative speed of objects.

The sensor unit 110 may include at least one of a camera, light detection and ranging (LiDAR), radio detection and ranging (RADAR), an ultrasonic sensor, an infrared sensor, and a position measurement sensor. The listed sensors are provided as examples for illustrative purposes only, and the sensors included in the sensor unit 110 of this document are not limited thereto. The camera may capture images around the vehicle to generate image data, including lanes and/or surrounding objects in the front, rear, and/or sides of the vehicle 100. The LiDAR may use light (or laser) to generate information about objects located in the front, rear, and/or sides of the vehicle 100. The radar may use electromagnetic waves (or radio waves) to generate information about objects located in the front, rear, and/or sides of the vehicle 100. The ultrasonic sensor may use ultrasonic waves to generate information about objects located in the front, rear, and/or sides of the vehicle 100. The infrared sensor may use infrared to generate information about objects located in the front, rear, and/or sides of the vehicle 100. The position measurement sensor may measure the current position of the vehicle 100. The position measurement sensor may include at least one of a global positioning system (GPS) sensor, a differential global positioning system (DGPS) sensor, and a global navigation satellite system (GNSS) sensor. The position measurement sensor may generate location data of the vehicle based on signals generated by at least one of the GPS sensor, DGPS sensor, and GNSS sensor.

The controller 120 may control the operation of at least one component of the vehicle 100 and/or at least one function of the vehicle under the control of the processor 130. At least one function may include, for example, steering function, acceleration function or longitudinal acceleration function, deceleration function or longitudinal deceleration function, brake function, lane change function, lane detection function, obstacle detection and distance detection function, lateral control function, powertrain control function, safe area detection function, engine on/off, power on/off, and at least one of locking/unlocking functions of the vehicle.

The controller 120 may control the operation of at least one component of the vehicle and/or at least one function of the vehicle for autonomous driving and/or minimal risk maneuver (MRM) of the vehicle under the control of the processor 130. For example, the controller 120 may control the operation of at least one of the steering function, acceleration function, deceleration function, lane change function, lane detection function, lateral control function, obstacle detection and distance detection function, powertrain control function, and safe area detection function for minimal risk maneuver.

The processor 130 may control the overall operation of the vehicle 100. The processor 130 may include an electrical control unit (ECU) capable of controlling components within the vehicle 100. The ECU may be integrated with one or more components of the vehicle 100. For example, the processor 130 may include a central processing unit (CPU) or micro processing unit (MCU) capable of performing computational tasks.

The processor 130 may activate automated driving system (ADS) upon occurrence of predetermined events, thereby controlling components within the vehicle 100 to enable autonomous driving. The predetermined events may occur when autonomous driving is requested by the driver, when vehicle control authority is delegated by the driver, or when conditions specified by the driver and/or designer are satisfied.

The processor 130 may determine whether autonomous driving is possible based on at least one of the vehicle state information and surrounding environmental information during autonomous driving. When autonomous driving is determined to be impossible, the processor 130 may determine and control the execution of an MRM strategy. Here, the MRM strategy may include an MRM type.

The processor 130 may include a vehicle state information acquisition unit 1310, a surrounding environment information acquisition unit 1320, a DDT fallback request unit 1330, an MRM strategy determination unit 1340, an emergency stop allowable space prediction unit 1350, and a collision risk prediction unit 1360, as shown in FIG. 2.

The vehicle state information acquisition unit 1310 may monitor the mechanical and/or electrical state of the components within the vehicle (e.g., sensors, actuators, etc.) from the moment ADS is activated, to acquire vehicle state information indicating whether mechanical and/or electrical faults occur in the internal components of the vehicle. Vehicle state information may include information on the mechanical and/or electrical state of the components within the vehicle. For example, vehicle state information may include information indicating whether the functions necessary for autonomous driving are operating normally, based on the mechanical and/or electrical state of the components within the vehicle.

The surrounding environment information acquisition unit 1320 may acquire information about the environment around the vehicle from the moment the ADS is activated, using the sensor unit 110 and/or communication device 150. The surrounding environment information acquisition unit 1320 may include a road information acquisition unit 1321 for obtaining information about the road on which the vehicle is traveling, and a surrounding object information acquisition unit 1322 for detecting objects around the vehicle from the sensor unit 110.

The road information acquisition unit 1321 may obtain road information about the location where the vehicle is traveling through the sensor unit 110. The road information acquisition unit 1321 may acquire map information from an external device (e.g., another vehicle or a server) via the communication device 150, and obtain road information about the location where the vehicle is traveling from the map information.

The surrounding object information acquisition unit 1322 may acquire information about objects surrounding the vehicle (e.g., other vehicles, pedestrians, objects, curbs, guardrails, lanes, obstacles) through the sensor unit 110. For example, the surrounding object information acquisition unit 1322 may obtain distance and relative speed for at least one vehicle located in the front, side, and/or rear of the vehicle.

The DDT fallback request unit 1330 may determine whether the functions required for autonomous driving are operating normally based on the vehicle state information. The functions necessary for autonomous driving may include, for example, lane detection, lane change, lateral control, deceleration (or brake control), powertrain control, safe area detection, and obstacle detection and distance sensing. The processor 130 may determine that normal autonomous driving is not possible when at least one of the functions necessary for autonomous driving cannot operate normally.

The DDT fallback request unit 1330 may determine whether the vehicle's state is suitable for normal operating conditions based on the vehicle state information. For example, the processor 130 may determine whether the mechanical state information of the vehicle (e.g., tire pressure information or engine overheating information) satisfies the requirements of normal operating conditions. Upon detecting that the vehicle's state does not meet the requirements of normal operating conditions, the processor 130 may determine that normal autonomous driving is impossible. For example, when it is found that the vehicle cannot operate normally due to tire pressure issues or engine overheating, the processor 130 may determine that normal autonomous driving is not possible.

The DDT fallback request unit 1330 may also determine whether the surrounding environment meets the requirements of the operational design domain (ODD) for autonomous driving based on at least one piece of surrounding environmental information. The operational design domain represents the conditions under which autonomous driving operates effectively. Upon detecting that the surrounding environmental information does not meet the ODD, the processor 130 may determine that normal autonomous driving is impossible.

If normal autonomous driving is not possible, the DDT fallback request unit 1330 may determine that a minimal risk maneuver is required to minimize the risk of an accident.

The DDT fallback request unit 1330 may request a minimum risk maneuver (MRM) strategy or emergency stop from the MRM strategy determination unit 1340 when an error is detected in the vehicle or infrastructure (including the autonomous valet parking server), or communication errors between the vehicle and infrastructure, based on vehicle state information and information received from the infrastructure.

The processor 130 may use the MRM strategy determination unit 1340 to select a minimum risk maneuver strategy from among a plurality of minimum risk maneuver strategies when a situation requiring the execution of a minimum risk maneuver arises. The MRM strategies may include seven types as shown in FIG. 3. For example, the MRM strategies may include an in-lane stop strategy 301 including types 1 and 2, a shoulder stop strategy 302 including types 3 through 6, and a straight stop strategy 303 including type 7.

The in-lane stop strategy 301 may include a stop within lane (type 1) 311 and a stop with one-side lateral deviation (type 2) 312. The shoulder stop strategy 302 may include a stop within shoulder (type 3) 313, a shoulder stop with lateral deviation (type 4) 314, a merge stop with double-side lateral deviation (type 5) 315, and a merge stop with longitudinal margin (type 6) 316. The straight stop strategy 303 may include a longitudinal stop (type 7) 317.

Type 1, the stop within lane 311, refers to stopping within the boundaries of the lane the vehicle was traveling in. For example, the in-lane stop 311 refers to a type where the vehicle stops within the boundaries of the lane the vehicle was traveling in through brake control 321, lateral control 322, and/or lane detection 323. The lane the vehicle was traveling in may refer to the lane the vehicle was in at the time when the need for a minimum risk maneuver is determined. The in-lane stop 311 may be performed in situations where the shoulder detection 324 is not available.

Type 2, the stop with one-side lateral deviation 312, involves stopping the vehicle at the side of the lane it is traveling in. For example, the stop with one-side lateral deviation 312 may mean stopping the vehicle at the lane side through brake control 321. The stop with one-side lateral deviation 312 may be performed when at least one of the functionalities of lateral control 322, lane detection 323, or shoulder detection 324 is unavailable.

Type 3, the stop within shoulder 313, involves stopping the vehicle with the entire vehicle positioned on the shoulder of the road. For example, the stop within shoulder 313 may mean stopping the vehicle after moving the entire vehicle out of the road's boundary and onto the shoulder using brake control 321, lateral control 322, lane detection 323, and/or shoulder detection 324.

Type 4, the should stop with lateral deviation 314, involves stopping with part of the vehicle positioned on the shoulder of the road. For example, the shoulder stop with lateral deviation 314 may mean stopping the vehicle after moving part of the vehicle onto the shoulder by using brake control 321, lateral control 322, lane detection 323, and/or shoulder detection 324, thereby moving part of the vehicle out of the road's boundary (or the boundary of the outermost lane) and onto the shoulder.

Type 5, the merge stop with double-side lateral deviation 315, involves stopping on the shoulder at the merge point where two roads converge. For example, the merge stop with double-side lateral deviation 315 may mean stopping the vehicle after moving the entire vehicle or part of the vehicle onto the shoulder at the merge point using brake control 321, lateral control 322, lane detection 323, and/or shoulder detection 324.

Type 6, the merge stop with longitudinal margin 316, involves stopping on the shoulder at a merge point where the vehicle merges from one road, such as a highway entrance merge point. For example, the merge stop with longitudinal margin 316 may mean stopping the vehicle after moving the entire vehicle or part of the vehicle onto the shoulder at the merge point using brake control 321, lateral control 322, lane detection 323, and/or shoulder detection 324.

Type 7, the longitudinal stop 317, involves stopping using only longitudinal deceleration functions such as brake control 321, without lateral control. For example, the longitudinal stop 317 may be performed in situations where at least one of the functionalities of lateral control 322, lane detection 323, or shoulder detection 324 is unavailable. For example, the longitudinal stop 317 may be used in situations where lane detection is impossible or lateral control is impossible due to actuator failure. Here, the detection of potential stopping locations out of traffic lane may refer to the function of detecting the positions of safe areas located outside traffic lanes, such as shoulders or rest areas.

The priority of the aforementioned MRM types may be determined based on the road, surrounding environment, and the vehicle's fail-operational capability. For example, to minimize the risk during a stop, the priority of MRM types corresponding to the shoulder stop strategy 302 may be set higher than those corresponding to the in-lane stop strategy 301. Additionally, the priority of the stop within shoulder 313 may be set higher than the shoulder stop with lateral deviation 314, and the priority of stop within shoulder 311 may be set higher than the longitudinal stop 317. That is, the priority of MRM types may be set to decrease in the order of stop within shoulder 313, shoulder stop with lateral deviation 314, stop within shoulder 311, and longitudinal stop 317.

The MRM strategy determination unit 1340 of the processor 130 may select an MRM strategy based on at least one of the vehicle state information and surrounding environmental information.

The MRM strategy determination unit 1340 may determine the feasible MRM types among the described MRM types based on the vehicle state information, including the normally functioning and/or malfunctioning features necessary for autonomous driving. For example, when the lateral control function is operating normally, it may be determined that all types of MRM, including the stop within lane 311, stop with one-side lateral deviation 312, stop within lane 313, shoulder stop with lateral deviation 314, merge stop with double-side lateral deviation 315, merge stop with longitudinal margin 316, and longitudinal stop 317, are all feasible. In another example, when the function of lateral control is not operating properly, it may be determined that longitudinal stop 317 is feasible.

When there is only one feasible MRM type identified based on the vehicle state information, the MRM strategy determination unit 1340 may determine the corresponding MRM type as the MRM strategy. For example, the MRM strategy determination unit 1340 may determine longitudinal stop 317 as the MRM strategy because only the longitudinal stop 317 is feasible in a situation where the function of lateral control 321 is not operating properly. In another example, the processor 1340 may determine longitudinal stop 317 as the MRM strategy because only longitudinal stop 317 is feasible when the driving lane is not detected due to sensor failure and/or external environment.

When there are multiple feasible MRM types identified based on the vehicle state information, the MRM strategy determination unit 1340 may determine the feasible MRM type within a designated minimal risk condition (MRC) range. The designated MRC range may be set and/or changed by the operator and/or the designer. The designated MRC range may be set differently depending on the vehicle performance, vehicle type, and/or external environment factors (e.g., weather, time, etc.).

The MRM strategy determination unit 1340 may determine the feasible MRM type within the MRC range based on whether or not there is a shoulder within the specified MRC range. When there is no shoulder within the designated MRC range, the MRM strategy determination unit 1340 may determine that at least one of the stop within lane 311, stop with one-side lateral deviation 312, and straight stop 317 is a feasible MRM type within the MRC range.

When a shoulder exists within the designated MRC range, the MRM strategy determination unit 1340 may determine the feasible MRM types within the MRC range based on the size of the shoulder. When the size of the shoulder within the designated MRC range is greater than or equal to a predetermined size, the MRM strategy determination unit 1340 may determine that the feasible MRM types within the MRC range include the stop within should 313, shoulder stop with lateral deviation 314, merge stop with double-side lateral deviation 315, merge stop with longitudinal margin 316, stop within lane 311, stop with one-side lateral deviation 312, and longitudinal stop 317. The predetermined size may be determined based on the size of the vehicle. When the size of the shoulder is smaller than the predetermined size, the MRM strategy determination unit 1340 may determine that the feasible MRM types within the MRC range include the shoulder stop with lateral deviation 314, merge stop with double-side lateral deviation 315, merge stop with longitudinal margin 316, stop within lane 311, stop with one-side lateral deviation 312, and longitudinal stop 317.

If there are multiple executable MRM types within the designated MRC range, the MRM strategy determination unit 1340 may select the final MRM strategy by considering priority and/or surrounding object information.

If there are multiple executable MRM types within the specified MRC range, the MRM strategy determination unit 1340 may select the MRM type with the highest priority among the feasible MRM types within the specified MRC range as the final MRM strategy. For example, as shown in FIG. 4A, when the width of the shoulder 410 within the designated MRC range 400 is greater than the width of the vehicle 100, the MRM strategy determination unit 1340 may select the highest-priority MRM type within the MRC range 400, i.e., the stop within shoulder 313, as the final MRM strategy. As another example, as shown in FIG. 4B, when the width of the shoulder 420 within the designated MRC range 400 is smaller than the width of the vehicle 100, the MRM strategy determination unit 1340 may select the highest-priority MRM type among the feasible MRM types within the MRC range 400, i.e., the shoulder stop with lateral deviation 314, as the final MRM strategy.

The MRM strategy determination unit 1340 may additionally consider the risk associated with performing the MRM strategy within the designated MRC range and select the final MRM strategy accordingly. For example, as shown in FIG. 5, suppose there is a shoulder 501 within the MRC range 400, where the width of the area of the shoulder 501 adjacent to the vehicle 100 is greater than the width of the vehicle 100, but the width of the area of the shoulder 501 farther from the vehicle 100 is smaller than the width of the vehicle 100. That is, it is assumed that there is a shoulder 501 within the MRC range 400 whose width gradually decreases. In this case, the MRM strategy determination unit 1340 may select the stop within shoulder 313 with the highest-priority based on the width of the shoulder 501. However, when there is a risk of collision with another vehicle 510 as denoted by reference number 520 when performing the stop within shoulder 313, the MRM strategy determination unit 1340 may select the shoulder stop with lateral deviation 314, which has a lower priority than the stop within shoulder 313 but poses no risk of collision with another vehicle 510, as the final MRM strategy.

If there are multiple feasible MRM types within the designated MRC range, the MRM strategy determination unit 1340 may select the final MRM strategy by considering the likelihood of collisions and the determination of accident liability. The MRM strategy determination unit 1340 may determine the likelihood of collisions with surrounding vehicles and the determination of accident liability based on the driving paths of each feasible MRM type within the designated MRC range. For the stop within shoulder and/or shoulder stop with lateral deviation types, which require lane changes, the MRM strategy determination unit 1340 may determine the likelihood of collisions and accident liability with surrounding vehicles positioned in the front-side, side, and/or rear-side of the host vehicle. For the stop within lane type, which does not require a lane change, the MRM strategy determination unit 1340 may determine the likelihood of collisions and accident liability with vehicles positioned behind the host vehicle.

To determine the likelihood of collisions and accident liability with surrounding vehicles, the MRM strategy determination unit 1340 may calculate the safety distance, which represents the difference between the minimum relative distance and the actual relative distance with surrounding vehicles, based on the responsibility sensitivity safety (RSS) model as shown in Equations 1 and 2, and determine the likelihood of collisions and accident liability based on the calculated safety distance.

$$RSS_x = d_x - d_{min,x}$$

$$RSS_y = d_y - d_{min,y}$$

$$\ldots\ldots \text{Equation (1)}$$

Here, $RSS_x$ represents the longitudinal safety distance, $d_{min,x}$ represents the minimum longitudinal relative distance that must be maintained with surrounding vehicles, and $d_x$ represents the actual longitudinal relative distance between the host vehicle and surrounding vehicles. Additionally, $RSS_y$ represents the lateral safety distance, $d_{min,y}$ represents the minimum lateral relative distance that must be maintained with surrounding vehicles, and $d_y$ represents the actual lateral relative distance between the host vehicle and surrounding vehicles.

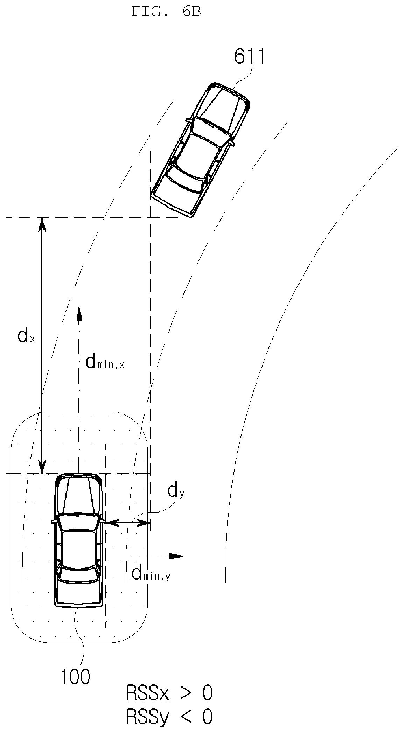

The MRM strategy determination unit 1340 may determine that the likelihood of collision with surrounding vehicles is low (or nonexistent) even when performing an MRM with a driving path related to the surrounding vehicles, provided that at least one of the longitudinal safety distance ($RSS_x$) or lateral safety distance ($RSS_y$) with surrounding vehicles is positive. Additionally, the MRM strategy determination unit 1340 may determine that the host vehicle is not responsible for the accident, even if a collision with surrounding vehicles occurs. For example, as shown in FIG. 6A, when the longitudinal safety distance ($RSS_x$) to the right front vehicle 601 from the host vehicle 100 is negative but the lateral safety distance ($RSS_y$) is positive, the MRM strategy determination unit 1340 may determine that the likelihood of collision with the right front vehicle 601 is low even when performing an MRM requiring lane changes (e.g., shoulder stop with lateral deviation or stop within shoulder), and may determine that the host vehicle 100 is not responsible for the accident, even if a collision with the right front vehicle 601 occurs. Another example is, as shown in FIG. 6B, when the lateral safety distance ($RSS_y$) to the front vehicle 611 traveling in the same lane from the host vehicle 100 is negative but the longitudinal safety distance ($RSS_x$) is positive, the MRM strategy determination unit 1340 may determine that the likelihood of collision with the front vehicle 611 is low even when performing an MRM requiring lane changes (e.g., shoulder stop with lateral deviation or stop within shoulder), and may determine that the host vehicle 100 is not responsible for the accident, even if a collision with the front vehicle 611 occurs.

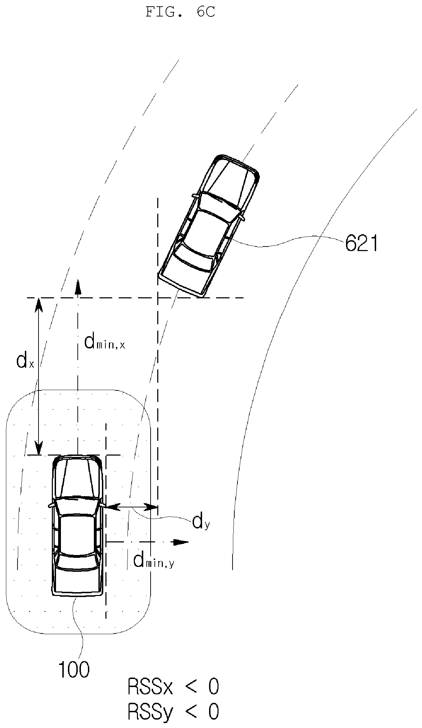

The MRM strategy determination unit 1340 may determine that the likelihood of collision with surrounding vehicles is high (or that a collision is likely) when both the longitudinal safety distance (RSS$_x$) and lateral safety distance (RSS$_y$) to surrounding vehicles are negative, when an MRM involving a driving path related to surrounding vehicles is performed. Additionally, the MRM strategy determination unit 1340 may determine that the host vehicle is responsible for the accident in the event of a collision with surrounding vehicles. For example, as shown in FIG. 6C, when both the longitudinal safety distance (RSS$_x$) and the lateral safety distance (RSS$_y$) to the right front vehicle 621 from the host vehicle 100 are negative, it may be determined that the likelihood of collision with the right front vehicle 621 is high when performing an MRM requiring lane changes (e.g., shoulder stop with lateral deviation or stop within shoulder). Additionally, the MRM strategy determination unit 1340 may determine that lane changes of the host vehicle 100 could cause a collision with the right front vehicle 621, thus concluding that the host vehicle 100 would be responsible for the accident in the event of a collision with the right front vehicle 621.

When the likelihood of collision with surrounding vehicles is determined to be high in the case of performing an MRM requiring lane changes, the MRM strategy determination unit 1340 may choose a lower-priority in-lane stop over the stop within shoulder or the shoulder stop with lateral deviation as the final MRM. In this case, the MRM strategy determination unit 1340 may calculate the longitudinal and lateral safety distances to rear vehicles traveling in the same lane as the host vehicle. When at least one of the longitudinal and lateral safety distances is positive, the MRM strategy determination unit 1340 may determine that the likelihood of a collision with the rear vehicle is low even if an in-lane stop is performed, and that the host vehicle is not responsible for the accident even if a collision with the rear vehicle occurs. For example, as shown in FIG. 7, the host vehicle 100, when in a situation requiring MRM execution, may calculate the longitudinal and lateral safety distances with the right rear vehicle 720 to perform the highest-priority Type 3, the stop within shoulder. However, when both the longitudinal and lateral safety distances with the right rear vehicle 720 are negative, there is a high likelihood of a collision with the side rear vehicle 720 due to lane changes required for the stop within shoulder, and the responsibility for such a collision may lie with the host vehicle 100. Meanwhile, since both the longitudinal and lateral safety distances with the rear vehicle 710 are positive, the host vehicle 100 may select Type 1, the stop within land, which has a lower priority than Type 4, as the final MRM strategy.

The longitudinal and lateral safety distances between the host vehicle and surrounding vehicles may be calculated by Equations 2 and 3.

Equation 2 is the formula for calculating the longitudinal safety distance (Rss$_x$) 810 between the host vehicle (Cr) and the surrounding vehicle (Cf) as shown in FIG. 8A, and Equation 3 is the formula for calculating the lateral safety distance (Rss$_y$) 820 between the host vehicle (Cr) and the surrounding vehicle (Cf) as shown in FIG. 8B.

$$Rss_x = v_{x,r}\rho + \frac{a_{max,accel}\rho^2}{2} + \frac{(v_{x,r} + \rho a_{max,accel})^2}{2a_{min,brake}} - \frac{v_{x,r}^2}{2a_{max,brake}}$$

$$\ldots\ldots \text{Equation (2)}$$

$$Rss_y = \mu + [\frac{2v_{y,r}\rho + a^{lat}_{max,accel}\rho^2}{2} + \frac{(v_{y,r} + \rho a^{lat}_{max,accel})^2}{2a^{lat}_{min,brake}}$$

$$- \left(\frac{2v_{y,f}\rho - a^{lat}_{max,accel}\rho^2}{2} \pm \frac{(v_{y,f} - \rho a^{lat}_{max,accel})^2}{2a_{max,brake}}\right)]$$

$$\ldots\ldots \text{Equation (3)}$$

Here, $\rho$ represents the reaction time, $\mu$ represents the lateral margin, $a_{min,brake}$ represents the minimum deceleration of the host vehicle, $a_{max,accel}$ represents the maximum acceleration of the surrounding vehicle, and $a_{max,brake}$ represents the maximum deceleration of the surrounding vehicle.

For the calculation of lateral and/or longitudinal safety distances, the parameters in Equations 2 and 3 may be set as shown in Table 1.

Table 1

| Param | Value |
|---|---|
| $\rho$ | 0.5(s) |
| $\mu$ | 0.4(m) |
| $a_{max,brake}$ | 6(m/s$^2$) |
| $a_{min,brake}$ | 8(m/s$^2$) |
| $a_{max,accel}$ | 0(m/s$^2$) |
| $a^{lat}_{min,brake}$ | 4(m/s$^2$) |
| $a^{lat}_{max,accel}$ | 0(m/s$^2$) |

The parameter values in Table 1 are illustrative, and the present disclosure is not limited to these values.

The MRM strategy determination unit 1340 may store the data supporting the selection of the final MRM strategy in memory 160. The supporting data may include at least one of the presence of a shoulder within the designated MRC range, the size of the shoulder (e.g., length and/or width), safety distances with surrounding vehicles, the vehicle state information of the host vehicle, or lane detection information. The MRM strategy determination unit 1340 may secure the rationale for choosing a lower-priority MRM strategy by storing supporting data related to the final MRM strategy selected. For example, when Type 7, the longitudinal stop, is chosen as the final MRM strategy, the MRM strategy determination unit 1340 may store in memory 160 at least one of the information indicating abnormal operation of the lateral control function, steering angle, steering speed, information indicating a fault in the lane detection sensor, or sensor values from the lane detection sensor. As another example, when Type 1, the stop within lane, is selected as the final MRM strategy despite the presence of a shoulder within the designated MRC range, the MRM strategy determination unit 1340 may store in memory 160 at least one of the longitudinal and lateral safety distance information for surrounding vehicles that was calculated during the MRM strategy selection process.

The corresponding MRM type may be selected. For example, the MRM strategy determination unit 1340 may determine the longitudinal stop 317 because the longitudinal stop 317 is only feasible when the lateral control function is not operating normally. As another example, the MRM strategy determination unit 1340 may determine the longitudinal stop 317 when the driving lane is not detected due to sensor faults and/or external environmental factors.

The processor 130 may control the vehicle to stop according to the final MRM strategy, while controlling to notify other vehicles and/or drivers of performing minimum risk maneuvers. The control actions to stop the vehicle may include generating a driving trajectory for stopping and/or performing lateral and/or longitudinal control actions to follow the generated trajectory. The processor 130 may control the display 140 to inform the driver that the vehicle is performing a minimum risk maneuver. As another example, the processor 130 may control the communication device 150 to notify other vehicles that the vehicle is performing minimum risk maneuvers. This is merely an illustrative example, and other methods of indicating minimum risk maneuvers are possible.

The processor 130 may perform control actions to stop the vehicle based on the determined minimum risk maneuver type and determine whether the MRC is satisfied. The MRC may refer to a state where the vehicle's speed is zero. For example, the processor 130 may determine whether the vehicle 100 achieves a stopped state with a speed of zero while performing at least one action corresponding to the determined final MRM type. Once the vehicle 100 is at a speed of zero, the processor 130 may determine that the MRC is satisfied.

The processor 130 may terminate the MRM execution when the MRC is satisfied and transition the autonomous driving system (ADS) to a standby state or off state. After transitioning the ADS to the standby state or off state, the processor 130 may control the system to transfer the control of the vehicle to the driver (or user) .

The emergency stop allowable space prediction unit 1350 may calculate the longitudinal length of the emergency stop allowable space based on the vehicle's speed and the time required for the vehicle to come to a stop (e.g., a full stop). If there is an obstacle on the vehicle's driving path, the emergency stop allowable space prediction unit 1350 may calculate the distance from the side of the emergency stop allowable space closest to the vehicle to the obstacle, compare this distance with the longitudinal length of the emergency stop allowable space, and determine the smaller one as the final longitudinal length of the emergency stop allowable space. In other words, the vehicle may update the emergency stop allowable space (e.g., emergency stop area) by adjusting (e.g., reducing) the longitudinal length of the emergency stop allowable space to match the distance between the object and the side of the emergency stop allowable space closest to the vehicle. The emergency stop allowable space prediction unit 1350 may calculate the lateral length of the emergency stop allowable space based on the vehicle's width and a predefined stop margin constant (also referred to as a stopping distance constant). The emergency stop allowable space prediction unit 1350 may calculate the lateral length of the emergency stop allowable space based on the vehicle's width and a predefined maximum lane tolerance value. If there is vulnerable road user within the emergency stop allowable space, the emergency stop allowable space prediction unit 1350 may adjust the final longitudinal length of the emergency stop allowable space by comparing the distance to the vulnerable road user with the final longitudinal length of the emergency stop allowable space, using the smaller value for correction. Further details will be described later.

The collision risk prediction unit 1360 may determine whether there is an obstacle on the vehicle's driving path based on the surrounding environment information generated by the surrounding environment information acquisition unit 1320. The collision risk prediction unit 1360 may determine whether there is a vulnerable road user within the emergency stop allowable space based on the surrounding environment information generated by the surrounding environment information acquisition unit 1320. Further details will be described later.

The display 140 may visually display information related to the vehicle 100. For example, under the control of the processor 130, the display 140 may provide the driver of the vehicle 100 with various information related to the state of the vehicle 100. The various information related to the state of the vehicle may include at least one of information indicating the normal operation or malfunction of various components included in the vehicle and/or at least one function of the vehicle, and information indicating the driving status of the vehicle. The driving state of the vehicle may include at least one of autonomous driving state, MRM execution state, MRM completion state, and autonomous driving termination state.

The communication device 150 may communicate with external devices of the vehicle 100. The communication device 150 may receive data from the outside of the vehicle 100 or transmit data the outside of the vehicle 100 under the control of the processor 130. For example, the communication device 150 may perform communication using wireless or wired communication protocols.

While FIG. 1 illustrates the controller 120 and processor 130 as separate components, the controller 120 and processor 130 may be integrated into a single component.

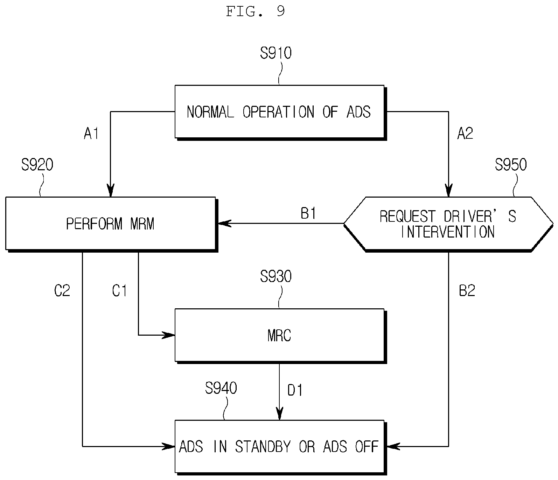

FIG. 9 is a flowchart illustrating the operation of a vehicle. In the description with reference to FIG. 9, the vehicle may be the vehicle 100 shown in FIG. 1.

With reference to FIG. 9, the vehicle 100 may operate the ADS normally in operation S910.

The vehicle 100 may perform autonomous driving in response to the normal operation of the ADS while monitoring the vehicle state and surrounding environment. The vehicle 100 may detect whether a minimum risk maneuver (MRM) is necessary based on the information obtained by monitoring the vehicle state and the surrounding environment. When an MRM is necessary, event A1 may occur.

The vehicle 100 may detect whether driver (or user) intervention is required while performing autonomous driving in response to the normal operation of the ADS. When driver intervention is necessary, the vehicle 100 may issue a request to intervene (RTI) or a warning through the ADS. The request for driver intervention or the warning may be event A2. When event A1 occurs while the ADS is operating normally, the vehicle 100 may proceed to operation S920.

When event A2 occurs while the ADS is operating normally, the vehicle 100 may determine in operation S950 whether driver intervention is detected within a predetermined time. When driver intervention is not detected within the predetermined time, event B1 may be determined to have occurred. When event B1 occurs, the vehicle 100 may proceed to operation S920. When driver intervention is detected within the predetermined time, the vehicle 100 may determine that event B2 has occurred. When event B2 occurs, the vehicle 100 may proceed to operation S940.

In operation S920, the vehicle 100 may perform a minimum risk maneuver (MRM). The vehicle 100 may determine the type of MRM based on at least one of the vehicle state information and the surrounding environment information. The surrounding environment information may include road information and information about surrounding vehicles. The MRM types may include, as shown in FIG. 3, stop within lane 311 of Type 1, stop with one-side lateral deviation 312 of Type 2, stop within shoulder 313 of Type 3, shoulder stop with lateral deviation 314 of Type 4, merge stop with double-side lateral deviation 315 of Type 5, merge stop with longitudinal margin 316 of Type 6, and/or longitudinal stop 317 of Type 7. The vehicle 100 may control at least one of its components to stop the vehicle according to the determined MRM type. The vehicle 100 may store the data used for determining the MRM type in memory 160.

The vehicle 100 may determine whether the minimum risk requirements are met by checking whether the speed of the vehicle reaches 0 through the execution of the minimum risk maneuver (MRM) in operation S920. When the minimum risk requirements are met, it may be determined that event C1 has occurred, and the vehicle 100 may proceed to operation S930. During the execution of the minimum risk maneuver, the vehicle 100 may determine whether the driver intervention is detected. When driver intervention is detected, it may be determined that event C2 has occurred, and the vehicle 100 may proceed to operation S940.

The vehicle 100 may maintain a state where minimum risk requirements are met during operation S930. This state may imply that the vehicle is stationary. For example, the vehicle 100 may remain in a stopped state. For example, the vehicle 100 may perform control actions to maintain the vehicle in a stopped state regardless of the slope of the road surface where the vehicle is stopped. While maintaining the state where minimum risk requirements are satisfied, the vehicle 100 may determine whether event D1 occurs. Event D1 may include at least one of ADS being turned off by the driver or the completion of control handover to the driver. When event D1 occurs, the vehicle 100 may proceed to operation S940.

In operation S940, the vehicle 100 may transition the ADS to a standby state or off state. During the time that the ADS is in standby state or off state, the vehicle 100 does not perform actions related to autonomous driving.

Operations S910, S920, S930, and S950 described above may correspond to the active state of the ADS, whereas operation S940 may correspond to the inactivate state of the ADS.

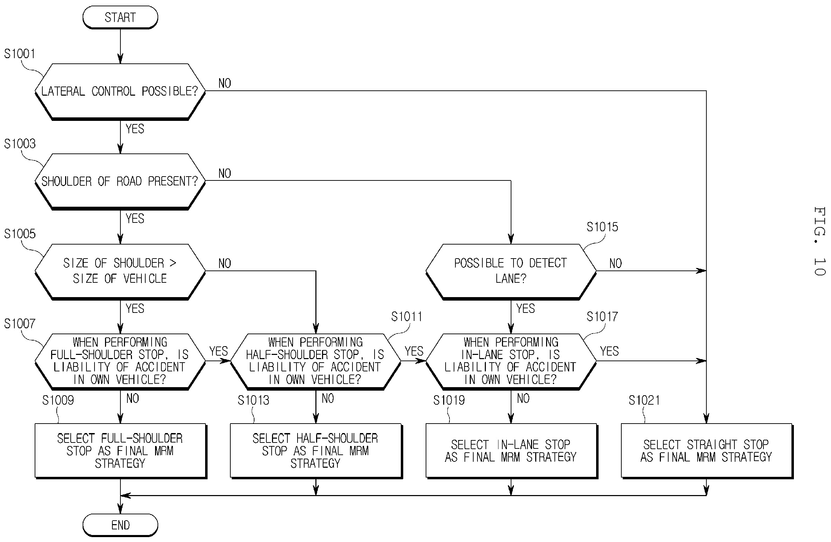

FIG. 10 is a flowchart illustrating the operation of a vehicle for determining an MRM strategy. The operations in FIG. 10 may be the details of operation S920 in FIG. 9. The operations may be performed sequentially, but they do not necessarily have to be performed in sequence. For example, the order of operations may be altered, and at least two operations may be simultaneously performed in parallel. In addition, the following operations may be performed by the processor 130 and/or controller 120 equipped in the vehicle 100, or may be implemented as instructions executable by the processor 130 and/or controller 120.

With reference to FIG. 10, the vehicle 100 may determine whether lateral control is possible based on vehicle state information in operation S1001. For example, the vehicle 100 may monitor the mechanical and/or electrical state of the components within the vehicle (e.g., sensors, actuators, etc.) to acquire vehicle state information indicating whether mechanical and/or electrical faults occur in the internal components of the vehicle. The vehicle 100 may determine whether lateral control (or steering control) is possible based on vehicle state information indicating the mechanical and/or electrical state of the sensors and/or actuators.

When lateral control is not possible, the vehicle 100 may select the longitudinal stop as the final MRM strategy in operation S1021. For example, as shown in FIG. 3, when lateral control is not possible, the vehicle 100 may only perform a longitudinal stop and therefore determine the longitudinal stop as the final MRM strategy.

When lateral control is possible, the vehicle 100 may determine whether a road shoulder exists within the MRC range in operation S1003. For example, the vehicle 100 may determine whether a road shoulder exists by checking the road information within the MRC range corresponding to a predetermined distance centered on the vehicle 100. The road information within the MRC range may be obtained from the sensing data of sensors (e.g., sensor unit 110) equipped in the vehicle 100 or from map information acquired through the communication device 150.

When there is no road shoulder, the vehicle 100 may determine in operation S1015 whether lane detection is possible. For example, in the absence of a road shoulder, the vehicle 100 cannot perform a road shoulder stop strategy and therefore needs to check whether lane detection is possible to determine whether an in-lane stop can be executed. The vehicle 100 may determine whether lane detection is possible or not based on the sensing values of the lane detection sensor.

When lane detection is not possible, the vehicle 100 may select the longitudinal stop as the final MRM strategy in operation S1021. For example, when lane detection is not possible, the vehicle 100 may determine that an in-lane stop cannot be performed and therefore determine the longitudinal stop as the final MRM strategy.

When lane detection is possible, the vehicle 100 may determine in operation S1017 whether the accident liability lies with the host vehicle when performing an in-lane stop. For example, the vehicle 100 may calculate the safety distance to the rear vehicle and based on the calculated safety distance, determine the likelihood of a collision and the accident liability. The rear vehicle may refer to a vehicle driving in the same lane as the host vehicle. The safety distance to the rear vehicle may include the longitudinal and lateral safety distances as indicated in Equation 1. When both the calculated longitudinal and lateral safety distances are negative, the vehicle 100 may determine that there is a high likelihood of collision with the rear vehicle when performing an in-lane stop, and that the accident liability would lie with the host vehicle. When at least one of the calculated longitudinal or lateral safety distances is positive, the vehicle 100 may determine that there is a low likelihood of collision with the rear vehicle when performing an in-lane stop, and that the host vehicle would not be responsible for the accident in the event of a collision.

When it is determined that the host vehicle would be responsible for an accident during the in-lane stop, the vehicle 100 may proceed to operation S1021 to select the longitudinal stop as the final MRM strategy.

When it is determined that the accident liability does not lie with the host vehicle during an in-lane stop, the vehicle 100 may select the in-lane stop as the final MRM strategy in operation S1019.

When the road shoulder is found to be present as a result of the check in operation S1003, the vehicle 100 may determine in operation S1005 whether the size of the shoulder is greater than the size of the vehicle. For example, the vehicle 100 may compare the width of the shoulder with the width of the vehicle to determine whether the stop within shoulder or the shoulder stop with lateral deviation is feasible.

When the size of the shoulder is greater than the size of the vehicle, the vehicle 100 may determine that the stop within shoulder is feasible and determine in operation S1007 whether the accident liability lies with the host vehicle during the stop within shoulder. For example, the vehicle 100 may calculate the driving path for stop within shoulder and compute the safety distances for at least one surrounding vehicle related to the calculated driving path. At least one surrounding vehicle related to the driving path for stop within shoulder may include one or more of a front-side vehicle, a side vehicle, and/or a rear-side vehicle. Based on the calculated safety distances, the vehicle 100 may assess the likelihood of collision with at least one surrounding vehicle and the accident liability. The safety distances for at least one surrounding vehicle may include longitudinal and lateral safety distances as shown in Equation 1. When both the calculated longitudinal and lateral safety distances are negative, the vehicle 100 may determine that there is a high likelihood of a collision with at least one surrounding vehicle during the stop within shoulder and that the accident liability would lie with the host vehicle. When at least one of the calculated longitudinal and lateral safety distances is positive, the vehicle 100 may determine that there is a low likelihood of a collision with at least one surrounding vehicle during the stop within shoulder and that the accident liability would not lie with the host vehicle.

When it is determined that the accident liability does not lie with the host vehicle during the stop within shoulder stop, the vehicle 100 may select the stop within shoulder as the final MRM strategy in operation S1009.

When it is determined that the accident liability lies with the host vehicle during the stop within shoulder, the vehicle 100 may proceed to operation S1011 to determine whether the accident liability lies with the host vehicle during the shoulder stop with lateral deviation. For example, the vehicle 100 may calculate the driving path for the shoulder stop with lateral deviation and compute the safety distances for at least one surrounding vehicle related to the calculated driving path. For the shoulder stop with lateral deviation, at least one surrounding vehicle related to the driving path may include one or more of a front-side vehicle, a side vehicle, and/or a rear-side vehicle. Based on the calculated safety distances, the vehicle 100 may assess the likelihood of collision with at least one surrounding vehicle and the accident liability. The safety distances for at least one surrounding vehicle may include longitudinal and lateral safety distances as shown in Equation 1. When both the calculated longitudinal and lateral safety distances are negative, the vehicle 100 may determine that there is a high likelihood of a collision with at least one surrounding vehicle during the shoulder stop with lateral deviation and that the accident liability would lie with the host vehicle. When at least one of the calculated longitudinal and lateral safety distances is positive, the vehicle 100 may determine that there is a low likelihood of a collision with at least one surrounding vehicle during the shoulder stop with lateral deviation and that the accident liability would not lie with the host vehicle.

When it is determined that the accident liability does not lie with the host vehicle during the shoulder stop with lateral deviation, the vehicle 100 may select the shoulder stop with lateral deviation as the final MRM strategy in operation S1013.

When it is determined that the accident liability lies with the host vehicle during the shoulder stop with lateral deviation, the vehicle 100 may proceed to operation S1017.

As described above, a vehicle can enhance safety and minimize risk by determining a minimum risk maneuver strategy based on vehicle state information and/or surrounding environment information when detecting a situation where normal autonomous driving is not possible, and by considering the accident liability for each type of minimum risk maneuver.

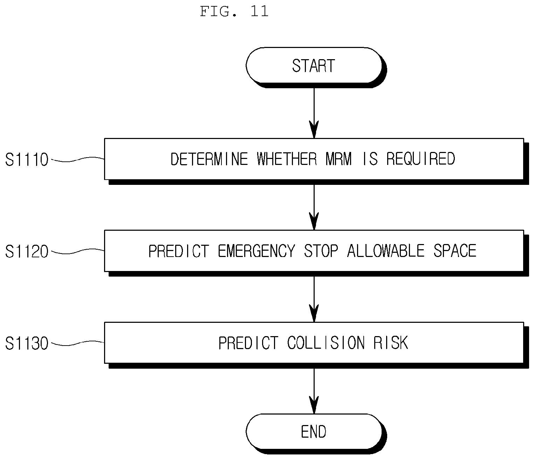

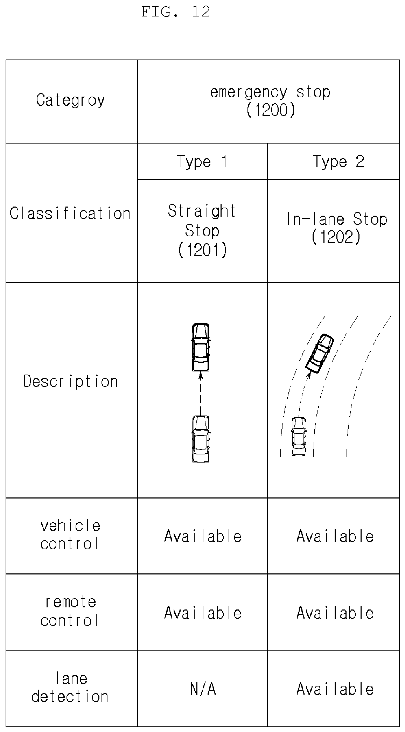

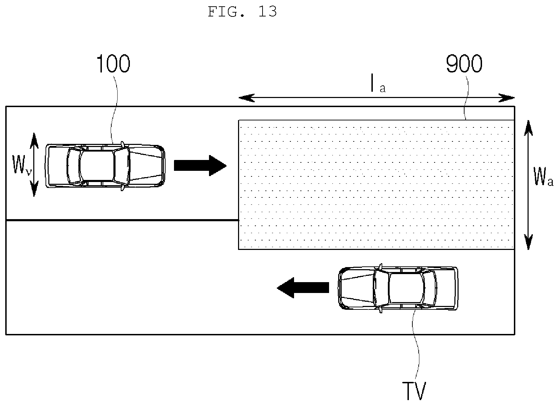

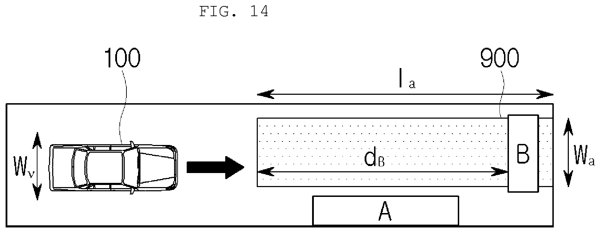

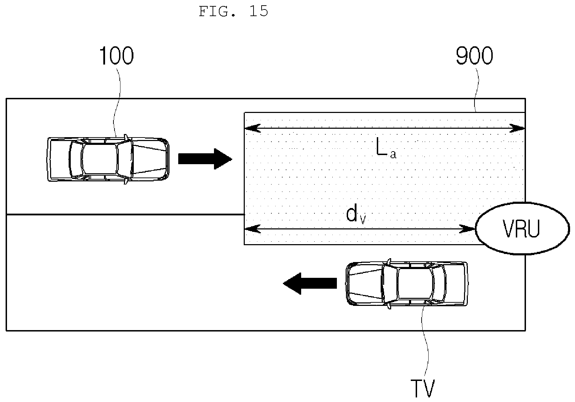

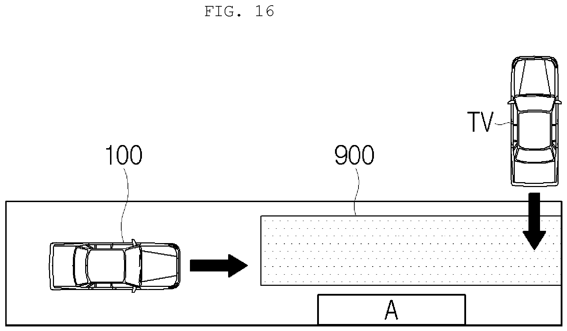

FIG. 11 is a flowchart illustrating the operation of predicting emergency stop allowable space and collision risk during autonomous driving. FIG. 12 is a diagram illustrating MRM strategies. FIG. 13 is a diagram illustrating how to predict emergency stop allowable space when the final MRM strategy is an in-lane stop type. FIG. 14 is a diagram illustrating how to predict emergency stop allowable space when the final MRM strategy is a straight stop type. FIG. 15 is a diagram illustrating how to predict collision risk when the final MRM strategy is an in-lane stop type. FIG. 16 is a diagram illustrating how to predict collision risk when the final MRM strategy is a straight stop type.

With reference to FIG. 11, the processor 130 may determine in operation S1110 whether a minimum risk maneuver is required during autonomous valet parking based on at least one of the surrounding environment information and vehicle state information, and when it is determined that a minimum risk maneuver is needed, may then determine the type of minimum risk maneuver.

The minimum risk maneuver during autonomous valet parking may be categorized into an emergency stop 1200, which includes Type 1, straight stop 1201, and Type 2, in-lane stop 1202, as shown in FIG. 12.

When it is determined that a minimum risk maneuver is needed, the processor 130 may predict (calculate) the emergency stop allowable space in operation S1120 for the vehicle to stop based on the vehicle's speed, the time required for the vehicle to stop, and the presence of fixed or dynamic obstacles. A fixed obstacle may be an object that is embedded into or attached to the ground (e.g., a bollard, a traffic sign, a pole, a fence, a wall, etc.) or is otherwise immobile (e.g., a barricade, debris, etc.). A dynamic obstacle may be any object that is moving or is capable of moving (e.g., a pedestrian, a cyclist, a vehicle, wildlife, a parking barrier arm, etc.) In operation S1130, the processor 130 may predict the risk of collision based on the surrounding environment information and, when a collision risk is predicted, may adjust the emergency stop allowable space.

The operations of predicting the emergency stop allowable space and predicting collision risk may be performed prior to determining the type of minimum risk maneuver.

When it is determined based on at least one of the surrounding environment information and vehicle state information that remote control is safe, the processor 130 may transmit the MRM determination results to the infrastructure (including the autonomous valet parking server).

When it is determined based on at least one of the surrounding environment information and vehicle state information that vehicle control is feasible, the processor 130 may perform control according to the MRM determination results.

With reference to FIGS. 13 and 14, the emergency stop allowable space 900 (also referred to as an emergency stop area) may represent an area where the vehicle 100 may engage in an emergency stop. The emergency stop allowable space 900 may have a size that is large enough area to allow for the vehicle 100 to come to a full stop safely (e.g., without colliding with an object or a person). In other words, the vehicle is able to come to a full stop within the emergency stop area if the vehicle ever needed to perform an emergency stop. The emergency stop allowable space 900 may be a virtual area with a longitudinal length $l_a$ and a lateral width $W_a$. The emergency stop allowable space 900 may be rectangular but is not limited to this shape and may be defined by various polygonal combinations.

The processor 130 may calculate the emergency stop allowable space 900 for performing a straight stop or in-lane stop. Using a pre-stored algorithm, the processor 130 may calculate the longitudinal length $l_a$ of the emergency stop allowable space 900 based on the speed vehicle 100 ($V_{des,SV}$) and the time required for the vehicle 100 to come to a stop ($t_{req}$). In detail, the processor 130 may calculate the longitudinal length $l_a$ of the emergency stop allowable space 900 using Equation 4.

$$l_a = \frac{v_{des,SV}^2}{2a_{min}}$$

$$\cdots\cdots \texttt{Equation (4)}$$

Here, $l_a$ represents the longitudinal length of the emergency stop allowable space, $V_{des,SV}$ represents the vehicle's speed, and $a_{min}$ represents the vehicle's average deceleration.

$a_{min}$ is given by Equation 5, and Equation 4 may be defined as shown in Equation 6. The processor 130 can calculate the longitudinal length $l_a$ of the emergency stop allowable space 900 using Equation 6.

$$a_{min} = \frac{v_{des,SV}}{t_{req}}$$

$$\cdots\cdots \texttt{Equation (5)}$$

Here, $a_{min}$ represents the vehicle's average deceleration, $V_{des,SV}$ represents the vehicle's speed, and $t_{req}$ represents the time required for the vehicle to stop.

$$l_a = \frac{v_{des,SV} \times t_{req}}{2}$$

$$\cdots\cdots \texttt{Equation (6)}$$

Here, $l_a$ represents the longitudinal length of the emergency stop allowable space, $V_{des,SV}$ represents the vehicle's speed, and $t_{req}$ represents the time the time required for the vehicle to stop.

The time $t_{req}$ for the vehicle to come to a stop may be set as shown in Table 2.

If the speed of the 100 is greater than 0 km/h and less than or equal to 10 km/h, the time $t_{req}$ for the vehicle to come to a stop may be 3 seconds (sec). If the speed of the vehicle 100 is greater than 10 km/h and less than or equal to 20 km/h, the time $t_{req}$ for the vehicle to come to a stop may be 4 seconds (sec). If the speed of the vehicle 100 is greater than 20 km/h and less than or equal to 30 km/h, the time $t_{req}$ for the vehicle to come to a stop may be 5 seconds (sec).

**Table 2**

| $v_{des,SV}$ at the time of initiation | $t_{req}$ |
|---|---|
| 0 km/h < $v_{des,SV} \leq$ 10 km/h | Within 3 s |
| 10 km/h < $v_{des,SV} \leq$ 20 km/h | Within 4 s |
| 20 km/h < $v_{des,SV} \leq$ 30 km/h | Within 5 s |

With reference to FIG. 14, the processor 130 may determine whether there are fixed obstacles (e.g., stationary objects or parked vehicles) on the vehicle's driving path using the sensor unit 110, and if a fixed obstacle B is present (e.g., within a threshold distance away from the vehicle), calculate the distance $d_B$ from the side of the emergency stop allowable space 900 closest to the vehicle to the fixed obstacle B, compare the distance $d_B$ to the fixed obstacle B with the longitudinal length $l_a$ of the emergency stop allowable space 900, and select the smaller one as the final longitudinal length $L_a$ of the emergency stop allowable space 900. The processor 130 may determine whether an obstacle is fixed or dynamic by analyzing changes in the obstacle's speed or position using the sensor unit 110.

The final longitudinal length $L_a$ may be defined as shown in Equation 7.

$$L_a = \min(l_a, d_B)$$

$$\cdots\cdots \text{Equation (7)}$$

Here, $L_a$ represents the final longitudinal length, $l_a$ represents the longitudinal length of the emergency stop allowable space 900, and $d_B$ represents the distance from the side of the emergency stop allowable space closest to the vehicle to the fixed obstacle.

For example, when the calculated longitudinal length $l_a$ of the emergency stop allowable space 900 is 4 meters and the distance $d_B$ to the fixed obstacle B is 3 meters, the processor 130 may set the final longitudinal length $L_a$ of the emergency stop allowable space 900 to the smaller value, which is 3 meters.

With reference to FIG. 14, when the minimum risk maneuver type is the straight stop (or when lane information cannot be obtained), the processor 130 may calculate the lateral length $W_a$ of the emergency stop allowable space 900 based on the vehicle's width $W_v$ and a preset stop margin constant $\delta_1$ using a pre-stored algorithm.

When the minimum risk maneuver type is the straight stop, the processor 130 may calculate the lateral length $W_a$ of the emergency stop allowable space 900 using Equation 8.

$$W_a = W_v + \delta_1$$

$$\cdots\cdots \text{Equation (8)}$$

Here, $W_a$ represents the lateral length, $W_v$ represents the vehicle's width, and $\delta_1$ represents the preset stop margin constant. The stop margin constant $\delta_1$ may be, for example, 0.375 meters, but this is not limiting and may vary depending on settings.

With reference to FIG. 13, when the minimum risk maneuver type is the in-lane stop (or when lane information can be obtained), the processor 130 may calculate the lateral length $W_v$ of the emergency stop allowable space 900 using a pre-stored algorithm based on the width $W_v$ of the vehicle 100 and a preset maximum lane tolerance $\delta_2$.

When the minimum risk maneuver type is the in-lane stop, the processor 130 may calculate the lateral length $W_a$ of the emergency stop allowable space 900 using Equation 9.

$$W_a = W_v + \delta_2$$

$$\cdots\cdots \text{Equation (9)}$$

Here, $W_a$ represents the lateral length, $W_v$ represents the vehicle's width, and $\delta_2$ represents the preset maximum lane tolerance.

With reference to FIG. 15, the processor 130 may determine whether dynamic obstacles (e.g., vulnerable road users such as cyclists or pedestrians, or other vehicles TV entering the emergency stop allowable space) are present within the emergency stop allowable space, predict collision risks, and adjust the final longitudinal length $L_a$ of the emergency stop allowable space 900 when a collision risk is predicted. In detail, if a dynamic obstacle is present within the emergency stop allowable space 900, the processor 130 may compare the distance $d_v$ from the side of the emergency stop allowable space 900 closest to the vehicle 100 to the dynamic obstacle with the final longitudinal length $L_a$ of the emergency stop allowable space 900 and adjust the final longitudinal length $L_a$ to the smaller value.

The adjusted final longitudinal length $L_{aa}$ may be defined as shown in Equation 10.

$$L_{aa} = \min(L_a, d_v)$$

$$\cdots\cdots \text{Equation (10)}$$

Here, $L_{aa}$ represents the adjusted final longitudinal length, $l_a$ represents the longitudinal length of the emergency stop allowable space 900, and $d_v$ represents the distance from the side of the emergency stop allowable space closest to the vehicle to the dynamic obstacle.

For example, when the calculated final longitudinal length $L_a$ of the emergency stop allowable space 900 is 3.5 meters and the distance $d_v$ to the dynamic obstacle is 3 meters, the processor 130 may adjust the final longitudinal length $L_a$ of the emergency stop allowable space 900 to the smaller value of 3 meters.

With reference to FIG. 1 and FIG. 16, the processor 51 of the autonomous valet parking server 50 may determine whether a minimum risk maneuver is required during autonomous driving based on at least one of the surrounding environment information and vehicle state information, and when it is determined that a minimum risk maneuver is needed, may then determine the type of minimum risk maneuver.

The minimum risk maneuver during autonomous valet parking may be categorized into an emergency stop 1200, which includes Type 1, straight stop 1201, or Type 2, in-lane stop 1202, as shown in FIG. 12.

When it is determined that a minimum risk maneuver is needed, the processor 51 may predict (calculate) the emergency stop allowable space for the vehicle to stop based on the vehicle's speed, the time required for the vehicle to stop, and the presence of fixed or dynamic obstacles. The processor 51 may predict the risk of collision based on the surrounding environment information and, when a collision risk is predicted, may adjust the emergency stop allowable space 900.

The processor 51 may calculate the emergency stop allowable space 900 for performing a straight stop or in-lane stop. Using a pre-stored algorithm, the processor 51 may calculate the longitudinal length $l_a$ of the emergency stop allowable space 900 based on the speed vehicle 100 ($V_{des,SV}$) and the time required for the vehicle 100 to come to a stop ($t_{req}$).

The processor 51 may determine whether there are fixed obstacles in the vehicle's driving path, and when a fixed obstacle B is present, calculate the distance $d_B$ from the side of the emergency stop allowable space 900 closest to the vehicle to the fixed obstacle B, compare the distance $d_B$ to the fixed obstacle B with the longitudinal length $l_a$ of the emergency stop allowable space 900, and select the smaller one as the final longitudinal length $L_a$ of the emergency stop allowable space 900.

When the minimum risk maneuver type is the straight stop (or when lane information cannot be obtained), the processor 51 may calculate the lateral length $W_a$ of the emergency stop allowable space 900 based on the vehicle's width $W_v$ and a preset stop margin constant $\delta_1$ using a pre-stored algorithm.

When the minimum risk maneuver type is the in-lane stop (or when lane information can be obtained), the processor 51 may calculate the lateral length $W_v$ of the emergency stop allowable space 900 using a pre-stored algorithm based on the width $W_v$ of the vehicle 100 and a preset maximum lane tolerance $\delta_2$.

The processor 51 may determine whether dynamic obstacles (e.g., vulnerable road users such as cyclists or pedestrians, or other vehicles TV entering the emergency stop allowable space) are present within the emergency stop allowable space, predict collision risks, and adjust the final longitudinal length $L_a$ of the emergency stop allowable space 900 when a collision risk is predicted. In detail, when a vulnerable road user (VRU) is present within the emergency stop allowable space 900, the processor 51 may compare the distance $d_v$ from the side of the emergency stop allowable space 900 closest to the vehicle 100 to the VRU with the final longitudinal length $L_a$ of the emergency stop allowable space 900 and adjust the final longitudinal length $L_a$ to the smaller value.

The operations of the processor 51 of the autonomous valet parking server 50 are the same as those of the processor 130 of the vehicle 100, so a detailed description is omitted.

With reference to FIG. 16, the processor 51 may determine whether there are dynamic obstacles (e.g., other vehicles TV) within the emergency stop allowable space 900, and when another vehicle TV is present within the emergency stop allowable space 900, the processor 51 may perform control to move the other vehicle TV.

After calculating the emergency stop allowable space 900, the processor 51 may control the movement of other vehicle TV to prevent its entry into the emergency stop allowable space 900. After calculating the emergency stop allowable space 900, the processor 51 may control the movement of other vehicles TV to prevent its entry into or exit from the emergency stop allowable space 900.

As described herein, a vehicle, If an emergency stop is required as part of a minimal-risk maneuver strategy during autonomous driving, the emergency stop allowable space corresponding to either a straight stop type or an in-lane stop type, assess collision risks, and to adjust the emergency stop allowable space based on predicted collision risks.

It may be advantageous, when an emergency stop is required as part of a minimal-risk maneuver strategy during autonomous driving, to predict the emergency stop allowable space corresponding to either a straight stop type or an in-lane stop type, and to adjust the emergency stop allowable space based on predicted collision risks.

The described functions may be implemented as hardware, software, firmware, or any combination thereof. When implemented in software, these functions may be stored or transmitted as one or more instructions or code on a computer-readable medium. A computer-readable medium includes all communication and computer storage media that facilitate the transfer of computer programs from one location to another. Storage media may be any available medium that is accessible by a computer. Non-exhaustive examples of such computer-readable media may include random access memory (RAM), read-only memory (ROM), electrically erasable programmable read-only memory (EEPROM), compact disc ROM (CD-ROM) or other optical disk storage, magnetic disk storage or other magnetic storage devices, or any other medium that can be accessed by a computer and used to convey or store the desired program code in the form of instructions or data structures.

When one or more example embodiments are implemented as program code or code segments, these code segments should be understood as representing procedures, functions, subprograms, programs, routines, subroutines, modules, software packages, classes, or any combination of instructions, data structures, or program statements. Code segments may be connected to other code segments or hardware circuits by transmitting and/or receiving information, data, arguments, parameters, or memory contents. Such information, arguments, parameters, data, etc., may be transmitted, sent, or conveyed using any suitable means including memory sharing, message passing, token passing, or network transmission. Additionally, aspects of methods or algorithms and/or operations may be integrated into a machine-readable medium and/or computer-readable medium as code and/or instructions, or any combination or set thereof, forming a computer program product.

In software implementations, the technologies described herein can be embodied as modules (e.g., procedures, functions, etc.) that perform the functionalities described. Software code may be stored in memory units and executed by processors. Memory units may be implemented either within a processor or externally, in which case the memory unit can be communicatively connected to the processor through various known means.

In hardware implementations, processing units may be implemented within one or more application-specific integrated circuits (ASICs), digital signal processors (DSPs), digital signal processing devices (DSPDs), programmable logic devices (PLDs), field-programmable gate arrays (FPGAs), processors, controllers, microcontrollers, microprocessors, other electronic units designed to perform the functions described herein, or any combination thereof.

An autonomous driving vehicle may include at least one sensor configured to detect a surrounding environment of the vehicle to generate surrounding environment information, a processor configured to monitor a state of the vehicle to generate vehicle state information, and to determine whether a minimum risk maneuver is required based on at least one of the surrounding environment information or the vehicle state information during autonomous valet parking, and a controller configured to control configured to control the operation of the vehicle according to the control of the processor, wherein, in response to the minimum risk maneuver being required, the processor may calculate an emergency stop allowable space for the vehicle to stop based on a speed of the vehicle, a time required for the vehicle to stop, and whether a fixed obstacle or a dynamic obstacle is present.

The processor may calculate a longitudinal length of the emergency stop allowable space based on the speed of the vehicle and the time required for the vehicle to stop.

The processor may determine whether the fixed obstacle is present on a driving path of the vehicle, calculate the distance from the side of the emergency stop allowable space closest to the vehicle to the fixed obstacle when the fixed obstacle is present, compare the distance to the fixed obstacle with the longitudinal length of the emergency stop allowable space, and select a smaller value between the distance to the fixed obstacle and the longitudinal length of the emergency stop allowable space as a final longitudinal length of the emergency stop allowable space.

The processor may calculate a lateral length of the emergency stop allowable space based on a width of the vehicle and a predetermined stop margin constant.

The processor may calculate a lateral length of the emergency stop allowable space based on a width of the vehicle and a predetermined maximum lane tolerance.

The processor may determine whether the dynamic obstacle is present within the emergency stop allowable space, predict whether a collision risk is present, and adjust the final longitudinal length of the emergency stop allowable space when the collision risk is present.

The processor may determine whether the dynamic obstacle is present within the emergency stop allowable space, compare the distance to the dynamic obstacle with the final longitudinal length of the emergency stop allowable space when the dynamic obstacle is present, and adjust the final longitudinal length of the emergency stop allowable space to the smaller value between the distance to the dynamic obstacle and the final longitudinal length of the emergency stop allowable space.

The time required for the vehicle to stop may be 3 seconds when the speed of the vehicle is greater than 0 km/h and less than or equal to 10 km/h.

The time required for the vehicle to stop may be 4 seconds when the speed of the vehicle is greater than 10 km/h and less than or equal to 20 km/h.

The time required for the vehicle to stop may be 5 seconds when the speed of the vehicle is greater than 20 km/h and less than or equal to 30 km/h.

An autonomous valet parking server may include a communication device configured to communicate with a vehicle, and a processor configured to receive vehicle state information from the vehicle and to determine whether a minimum risk maneuver is required based on at least one of surrounding environment information or the vehicle state information during autonomous driving, wherein, in response to a minimum risk maneuver being required, the processor may calculate an emergency stop allowable space for the vehicle to stop based on a speed of the vehicle, a time required for the vehicle to stop, and whether a fixed obstacle or a dynamic obstacle is present.

The processor may calculate a longitudinal length of the emergency stop allowable space based on the speed of the vehicle and the time required for the vehicle to stop.

The processor may determine whether the fixed obstacle is present on a driving path of the vehicle, calculate the distance from the side of the emergency stop allowable space closest to the vehicle to the fixed obstacle when the fixed obstacle is present, compare the distance to the fixed obstacle with the longitudinal length of the emergency stop allowable space, and select a smaller value between the distance to the fixed obstacle and the longitudinal length of the emergency stop allowable space as a final longitudinal length of the emergency stop allowable space.

The processor may calculate a lateral length of the emergency stop allowable space based on a width of the vehicle and a predetermined stop margin constant.

The processor may calculate the lateral length of the emergency stop allowable space based on a width of the vehicle and a predetermined maximum lane tolerance.

The processor may determine whether the dynamic obstacle is present within the emergency stop allowable space, compare the distance to the dynamic obstacle with the final longitudinal length of the emergency stop allowable space when the dynamic obstacle is present within the emergency stop allowable space, and adjust the final longitudinal length of the emergency stop allowable space to the smaller value between the distance to the dynamic obstacle and the final longitudinal length of the emergency stop allowable space.

The processor may determine whether another vehicle is present within the emergency stop allowable space, and move the other vehicle when the another vehicle is present.

After calculating the emergency stop allowable space, the processor may control the movement of another vehicle to prevent the another vehicle from entering into the emergency stop allowable space.

A method of operating an autonomous driving vehicle may include acquiring surrounding environment information by detecting the surrounding environment of the vehicle during autonomous driving of the vehicle, acquiring vehicle state information by monitoring the state of the vehicle during the autonomous driving of the vehicle, determining whether a minimum risk maneuver is required based on at least one of the surrounding environment information or the vehicle state information during autonomous driving, and calculating, in response to the minimum risk maneuver being required, an emergency stop allowable space for the vehicle to stop based on a speed of the vehicle, a time required for the vehicle to stop, and whether a fixed obstacle or a dynamic obstacle is present.

The calculating of the emergency stop allowable space may include calculating a longitudinal length of the emergency stop allowable space based on the speed of the vehicle and the time required for the vehicle to stop.

The calculating of the emergency stop allowable space may include determining whether the fixed obstacle is present on a driving path of the vehicle, calculating the distance from the side of the emergency stop allowable space closest to the vehicle to the fixed obstacle when the fixed obstacle is present, comparing the distance to the fixed obstacle with the longitudinal length of the emergency stop allowable space, and selecting a smaller value between the distance to the fixed obstacle and the longitudinal length of the emergency stop allowable space as a final longitudinal length of the emergency stop allowable space.

The calculating of the emergency stop allowable space may include calculating a lateral length of the emergency stop allowable space based on a width of the vehicle and a predetermined stop margin constant.

The calculating of the emergency stop allowable space may include calculating a lateral length of the emergency stop allowable space based on a width of the vehicle and a predetermined maximum lane tolerance.

The calculating of the emergency stop allowable space may include determining whether the dynamic obstacle is present within the emergency stop allowable space, predicting whether a collision risk is present, and adjusting the final longitudinal length of the emergency stop allowable space when the collision risk is present.

The foregoing includes one or more examples embodiments. the above examples do not describe all possible combinations of components or methods for illustrative purposes, and those skilled in the art will recognize that many additional combinations and substitutions of various example embodiments are possible. Therefore, the described example embodiments are intended to encompass all alternatives, modifications, and variations within the true spirit and scope of the appended claims. Moreover, when the term "includes" is used in the detailed description or claims, it is to be understood in a similar manner to how the term "comprises" would be interpreted when used as an open-ended term in the claims.

As used herein, the term "infer" or "inference" generally refers to the process of making decisions or drawing conclusions about the state of a system, environment, and/or user based on a set of observations captured by events and/or data. Inference may be used to identify specific situations or actions, or to generate, for example, probability distributions about states. It may be probabilistic, meaning it involves calculating probability distributions about states based on the examination of data and events. Inference may also refer to techniques used to construct higher-level events from a set of events and/or data. Such inference allows for estimating new events or actions from a set of observed events and/or stored event data, determining whether events are temporally correlated, and estimating whether the events and data originate from one or multiple event and data sources.

Throughout the present disclosure, references to components, units, or modules generally refer to items that logically can be grouped together to perform a function or group of related functions. Like reference numerals are generally intended to refer to the same or similar components. Components, units, and modules may be implemented in software, hardware or a combination of software and hardware. The components, units, modules, and/or functions described above may be implemented and/or performed by one or more processors. For examples, the components, units, and/or modules may include processor(s), microprocessor(s), graphics processing unit(s), logic circuit(s), dedicated circuit(s), application-specific integrated circuit(s), programmable array logic, field-programmable gate array(s), controller(s), microcontroller(s), and/or other suitable hardware. The components, units, and/or modules may also include software control module(s) implemented with a processor or logic circuitry for example. The components, units, and/or modules may include or otherwise be able to access memory such as, for example, one or more non-transitory computer-readable storage media, such as random-access memory, read-only memory, electrically erasable programmable read-only memory, erasable programmable read-only memory, flash/other memory device(s), data registrar(s), database(s), and/or other suitable hardware. One or more storage type media may include any or all of the tangible memory of computers, processors, or the like, or associated modules thereof, such as various semiconductor memories, tape drives, disk drives and the like, which may provide non-transitory storage at any time for software programming.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, and C", "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

Furthermore, as used in this application, terms such as "component," "module," and "system" are not limited to but may include computer-related entities such as hardware, firmware, combinations of hardware and software, software, or executing software. For example, a component may include, but is not limited to, a process running on a processor, a processor, an object, an executable thread, a program, and/or a computer. For example, both an application running on a computing device and the computing device itself may be considered components. One or more components may reside within processes and/or execution threads and may be concentrated on a single computer or distributed across two or more computers. Additionally, these components may be executed from various computer-readable media that store various data structures. Components may communicate via local and/or remote processes, for example, by following signals containing data packets (such as data from a local system, other components in a distributed system, or from other systems through networks like the Internet).

**Claims**

1.  An autonomous driving vehicle comprising:

    at least one sensor configured to detect a surrounding environment of the autonomous driving vehicle to generate surrounding environment information;
    a controller configured to control one or more operations of the autonomous driving vehicle; and
    a processor configured to:

    monitor a state of the autonomous driving vehicle to generate vehicle state information;
    during autonomous driving of the autonomous driving vehicle, determine, based on at least one of the surrounding environment information or the vehicle state information, whether a minimum risk maneuver is required;
    determine, based on the minimum risk maneuver being required, an emergency stop area, in which the autonomous driving vehicle is able to come to a full stop, wherein the emergency stop area is determined further based on a speed of the autonomous driving vehicle, a time required for the autonomous driving vehicle to come to the full stop, and whether an obstacle is present in a driving path of the autonomous driving vehicle; and

    control, via the controller and based on the emergency stop area, the autonomous driving vehicle to perform autonomous parking.

2.  A server comprising:

    a communication interface configured to communicate with an autonomous driving vehicle; and
    a processor configured to:

    receive, from the autonomous driving vehicle, vehicle state information of the autonomous driving vehicle;
    determine, based on at least one of surrounding environment information of the autonomous driving vehicle or the vehicle state information, whether a minimum risk maneuver is required for the autonomous driving vehicle;

determine, based on the minimum risk maneuver being required, an emergency stop area, in which the autonomous driving vehicle is able to come to a full stop, wherein the emergency stop area is determined further based on a speed of the autonomous driving vehicle, a time required for the autonomous driving vehicle to come to the full stop, and whether an obstacle is present in a driving path of the autonomous driving vehicle; and

cause, based on the emergency stop area, the autonomous driving vehicle to perform autonomous parking.

3. The autonomous driving vehicle or server of claim 1 or 2, wherein the processor is configured to determine the emergency stop area by:

determining, based on the speed of the autonomous driving vehicle and the time required for the autonomous driving vehicle to come to the full stop, a longitudinal length of the emergency stop area.

4. The autonomous driving vehicle or server of claim 3, wherein the processor is further configured to:

determine whether the obstacle is present in the driving path of the autonomous driving vehicle, wherein the obstacle is a fixed obstacle;

determine a distance between the fixed obstacle and a side, of the emergency stop area, that is closest to the autonomous driving vehicle; and

update, based on the longitudinal length of the emergency stop area being greater than the distance, the emergency stop area by adjusting the longitudinal length of the emergency stop area to match the distance.

5. The autonomous driving vehicle or server of any one of the preceding claims, wherein the processor is configured to determine the emergency stop area by:

determining, based on a width of the autonomous driving vehicle and a predetermined stopping distance constant, a lateral length of the emergency stop area.

6. The autonomous driving vehicle or server of any one of the preceding claims, wherein the processor is configured to determine the emergency stop area by:

determining, based on a width of the autonomous driving vehicle and a predetermined maximum lane tolerance, a lateral length of the emergency stop area.

7. The autonomous driving vehicle or server of any one of the preceding claims, wherein the processor is further configured to:

determine whether the obstacle is present within the emergency stop area, wherein the obstacle is a dynamic obstacle;

determine a collision risk associated with the dynamic obstacle; and

adjust, based on the collision risk, a longitudinal length of the emergency stop area.

8. The autonomous driving vehicle or server of any one of the preceding claims, wherein the processor is further configured to:

determine whether the obstacle is present within the emergency stop area, wherein the obstacle is a dynamic obstacle;

determine a distance between the dynamic obstacle and a side, of the emergency stop area, that is closest to the autonomous driving vehicle; and

update, based on a longitudinal length of the emergency stop area being greater than the distance, the emergency stop area by adjusting the longitudinal length of the emergency stop area to match the distance.

9. The autonomous driving vehicle of any one of claims 1 and 3 to 8, wherein, based on the speed of the autonomous driving vehicle being greater than 0 km/h and less than or equal to 10 km/h, the time required for the autonomous driving vehicle to come to the full stop is set to 3 seconds.

10. The autonomous driving vehicle of any one of claims 1 and 3 to 9, wherein, based on the speed of the autonomous driving vehicle being greater than 10 km/h and less than or equal to 20 km/h, the time required for the autonomous driving vehicle to come to the full stop is set to 4 seconds.

**11.** The autonomous driving vehicle any one of claims 1 and 3 to 10, wherein, based on the speed of the autonomous driving vehicle being greater than 20 km/h and less than or equal to 30 km/h, the time required for the autonomous driving vehicle to come to the full stop is set to 5 seconds.

**12.** The server of any one of claims 2 to 8, wherein the processor is further configured to:

determine whether another vehicle is present within the emergency stop area; and
cause the another vehicle to move out of the emergency stop area.

**13.** The server of claim 12, wherein the processor is configured to cause the autonomous driving vehicle to perform autonomous parking by sending a first signal causing the autonomous driving vehicle to move into the emergency stop area, and
wherein the processor is further configured to:
cause movement of another vehicle to prevent the another vehicle from entering the emergency stop area by sending a second signal causing the another vehicle to drive along a path that prevents the another vehicle from entering the emergency stop area.

**14.** A method performed by an apparatus of an autonomous driving vehicle, in particular autonomous driving vehicle according to any one of claims 1 to 11, the method comprising:

determining surrounding environment information of the autonomous driving vehicle by detecting, via one or more sensors, a surrounding environment of the autonomous driving vehicle;
determining vehicle state information of the autonomous driving vehicle by monitoring a state of the autonomous driving vehicle;
during autonomous driving of the autonomous driving vehicle, determining, based on at least one of the surrounding environment information or the vehicle state information, whether a minimum risk maneuver is required;
determining, based on the minimum risk maneuver being required, an emergency stop area, in which the autonomous driving vehicle is able to come to a full stop, wherein the emergency stop area is determined further based on a speed of the autonomous driving vehicle, a time required for the autonomous driving vehicle to come to the full stop, and whether an obstacle is present in a driving path of the autonomous driving vehicle; and
control, based on the emergency stop area, the autonomous driving vehicle to perform autonomous parking.

FIG. 1

FIG. 2

130

1330 — DDT FALLBACK REQUEST UNIT

1321  1320  1322

SURROUNDING ENVIRONMENT INFORMATION ACQUISITION UNIT

1310 — VEHICLE STATE INFORMATION ACQUISITION UNIT

ROAD INFORMATION ACQUISITION UNIT

SURROUNDING OBJECT INFORMATION ACQUISITION UNIT

1350 — EMERGENCY STOP ALLOWABLE SPACE PREDICTION UNIT

1360

1340 — MRM STRATEGY DETERMINATION UNIT

COLLISION RISK PREDICTION UNIT

FIG. 3

| Categroy | In-lane Stop (301) | | Shoulder Stop (302) | | | | Straight Stop (303) |
|---|---|---|---|---|---|---|---|
| | Type 1 | Type 2 | Type 3 | Type 4 | Type 5 | Type 6 | Type 7 |
| Classification | Stop within lane (311) | Stop with one-side lateral deviation (312) | Stop within shoulder (313) | Shoulder stop with lateral deviation (314) | Merge stop with double-side lateral deviation (315) | Merge stop with longitudinal margin (316) | Longitudinal stop (317) |
| Description | | | | | | | |
| brake control (321) | Required | Required | Required | Required | Required | Required | Required |
| lateral control (322) | Required | NOT Required | Required | Required | Required | Required | NOT Required |
| lane detection (323) | Required | NOT Required | Required | Required | Required | Required | NOT Required |
| shoulder detection (324) | NOT Required | NOT Required | Required | Required | Required | Required | NOT Required |

FIG. 4A

FIG. 4B

FIG. 5

FIG. 6A

RSSx < 0
RSSy > 0

FIG. 6B

611

$d_x$

$d_{min,x}$

$d_y$

$d_{min,y}$

100

RSSx > 0
RSSy < 0

FIG. 6C

621

$d_x$

$d_{min,x}$

$d_y$

$d_{min,y}$

100

RSSx < 0
RSSy < 0

FIG. 7

FIG. 8A

810

Rss$_X$

FIG. 8B

FIG. 9

EP 4 682 004 A1

FIG. 10

START

S1001 — LATERAL CONTROL POSSIBLE? —NO→

YES ↓

S1003 — SHOULDER OF ROAD PRESENT? —NO→

YES ↓

S1005 — SIZE OF SHOULDER > SIZE OF VEHICLE? —NO→

YES ↓

S1007 — WHEN PERFORMING FULL-SHOULDER STOP, IS LIABILITY OF ACCIDENT IN OWN VEHICLE? —YES→

NO ↓

S1009 — SELECT FULL-SHOULDER STOP AS FINAL MRM STRATEGY

S1011 — WHEN PERFORMING HALF-SHOULDER STOP, IS LIABILITY OF ACCIDENT IN OWN VEHICLE? —YES→

NO ↓

S1013 — SELECT HALF-SHOULDER STOP AS FINAL MRM STRATEGY

S1015 — POSSIBLE TO DETECT LANE? —NO→

YES ↓

S1017 — WHEN PERFORMING IN-LANE STOP, IS LIABILITY OF ACCIDENT IN OWN VEHICLE? —YES→

NO ↓

S1019 — SELECT IN-LANE STOP AS FINAL MRM STRATEGY

S1021 — SELECT STRAIGHT STOP AS FINAL MRM STRATEGY

END

FIG. 11

```
                    ┌─────────────┐
                    │    START    │
                    └─────────────┘
                           │
                           ▼
S1110 ─────┌──────────────────────────────────────────────┐
           │      DETERMINE WHETHER MRM IS REQUIRED        │
           └──────────────────────────────────────────────┘
                           │
                           ▼
S1120 ─────┌──────────────────────────────────────────────┐
           │      PREDICT EMERGENCY STOP ALLOWABLE SPACE   │
           └──────────────────────────────────────────────┘
                           │
                           ▼
S1130 ─────┌──────────────────────────────────────────────┐
           │           PREDICT COLLISION RISK             │
           └──────────────────────────────────────────────┘
                           │
                           ▼
                    ┌─────────────┐
                    │     END     │
                    └─────────────┘
```

FIG. 12

| Categroy | emergency stop (1200) | |
|---|---|---|
| | Type 1 | Type 2 |
| Classification | Straight Stop (1201) | In-lane Stop (1202) |
| Description | | |
| vehicle control | Available | Available |
| remote control | Available | Available |
| lane detection | N/A | Available |

FIG. 13

FIG. 14

FIG. 15

FIG. 16

| | Europäisches Patentamt European Patent Office Office européen des brevets | **EUROPEAN SEARCH REPORT** | **Application Number** EP 25 15 4348 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2022/092681 A1 (HYUNDAI MOTOR CO LTD [KR]; KIA CORP [KR]) 5 May 2022 (2022-05-05) * figures 1-18 * * paragraphs [0005], [0119], [0149], [0151], [0152], [0200] * * the whole document * | 1-14 | INV. B60W30/06 B62D15/02 |
| Y | US 2023/174106 A1 (XIANG JINGYU [JP] ET AL) 8 June 2023 (2023-06-08) * figures 1-17 * * paragraphs [0087] - [0090], [0106], [0114], [0149] * * the whole document * | 1-14 | |
| A | US 2021/190947 A1 (CHANG SONGTAO [CN] ET AL) 24 June 2021 (2021-06-24) * figures 1-16 * * paragraph [0150] * * the whole document * | 1,2,14 | |
| A | US 2021/237752 A1 (EWERT MARLON RAMON [DE]) 5 August 2021 (2021-08-05) * figure 2 * * paragraph [0065] * * the whole document * | 12,13 | TECHNICAL FIELDS SEARCHED (IPC) B60W B62D |

The present search report has been drawn up for all claims

| Place of search | Date of completion of the search | Examiner |
|---|---|---|
| Munich | 23 June 2025 | Dubreuil, Cédric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4348

23-06-2025

| Patent document cited in search report | Publication date | Patent family member(s) | Publication date |
|---|---|---|---|
| WO 2022092681 A1 | 05-05-2022 | CN 116529135 A | 01-08-2023 |
| | | CN 116529136 A | 01-08-2023 |
| | | CN 116529137 A | 01-08-2023 |
| | | CN 116529138 A | 01-08-2023 |
| | | CN 116529139 A | 01-08-2023 |
| | | CN 116529140 A | 01-08-2023 |
| | | CN 119953402 A | 09-05-2025 |
| | | DE 112021005714 T5 | 23-11-2023 |
| | | DE 112021005725 T5 | 09-11-2023 |
| | | DE 112021005727 T5 | 21-09-2023 |
| | | DE 112021005728 T5 | 05-10-2023 |
| | | DE 112021005729 T5 | 05-10-2023 |
| | | DE 112021005735 T5 | 21-09-2023 |
| | | JP 2023548299 A | 16-11-2023 |
| | | JP 2023550015 A | 30-11-2023 |
| | | JP 2023550016 A | 30-11-2023 |
| | | JP 2023550017 A | 30-11-2023 |
| | | JP 2023550018 A | 30-11-2023 |
| | | JP 2023550019 A | 30-11-2023 |
| | | KR 20220056118 A | 04-05-2022 |
| | | KR 20220056119 A | 04-05-2022 |
| | | KR 20220056120 A | 04-05-2022 |
| | | KR 20220056121 A | 04-05-2022 |
| | | KR 20220056122 A | 04-05-2022 |
| | | KR 20220056123 A | 04-05-2022 |
| | | KR 20250040901 A | 25-03-2025 |
| | | US 2023382371 A1 | 30-11-2023 |
| | | US 2023391368 A1 | 07-12-2023 |
| | | US 2023391369 A1 | 07-12-2023 |
| | | US 2023399018 A1 | 14-12-2023 |
| | | US 2023399019 A1 | 14-12-2023 |
| | | US 2024017749 A1 | 18-01-2024 |
| | | WO 2022092681 A1 | 05-05-2022 |
| | | WO 2022092682 A1 | 05-05-2022 |
| | | WO 2022092683 A1 | 05-05-2022 |
| | | WO 2022092684 A1 | 05-05-2022 |
| | | WO 2022092685 A1 | 05-05-2022 |
| | | WO 2022092686 A1 | 05-05-2022 |
| US 2023174106 A1 | 08-06-2023 | CN 115884908 A | 31-03-2023 |
| | | JP 7435787 B2 | 21-02-2024 |
| | | JP WO2022025087 A1 | 03-02-2022 |
| | | US 2023174106 A1 | 08-06-2023 |
| | | WO 2022025087 A1 | 03-02-2022 |
| US 2021190947 A1 | 24-06-2021 | CN 111311925 A | 19-06-2020 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 4348

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | Publication date | Patent family member(s) | Publication date |
|---|---|---|---|
| | | EP 3816851 A2 | 05-05-2021 |
| | | JP 2021117974 A | 10-08-2021 |
| | | KR 20210038401 A | 07-04-2021 |
| | | US 2021190947 A1 | 24-06-2021 |
| US 2021237752 A1 | 05-08-2021 | CN 112469609 A | 09-03-2021 |
| | | DE 102018212025 A1 | 23-01-2020 |
| | | US 2021237752 A1 | 05-08-2021 |
| | | WO 2020015923 A1 | 23-01-2020 |

EPO FORM P0459

For more details about this annex : see Official Journal of the European Patent Office, No. 12/82

page 2 of 2